# EUROPEAN PATENT APPLICATION

(11) **EP 1 584 228 A1**
(43) Date of publication of application: **12.10.2005**
(21) Application number: 03768309.1
(22) Date of filing: 26.12.2003
(51) Int. Cl.: A01G 1/00, A01G 31/00

(54) **GROWTH MEDIUM FOR SPHAGNUM MOSS**

(30) Priority: 27.12.2002 JP 2002382541; 28.03.2003 JP 2003092506; 21.10.2003 JP 2003361086
(71) Applicant: Shimura, Mitsuharu, Tokyo 169-0075 (JP)
(72) Inventor: SHIMURA, Mitsuharu, Shinjuku-ku, Tokyo 169-0075 (JP); TAKEDA, Minoru, Minato-ku, Tokyo 105-0014 (JP)
(74) Representative: Bohmann, Armin K.
(86) International application number: PCT/JP2003/016882
(87) International publication number: WO 2004/060049

(57) **Abstract**

One object of the present invention is to provide means for readily attaining a large scale cultivation of sphagnum moss under various conditions, in other words, means for establishing a sphagnum field under various conditions. Specifically, the present inventors have found that the above object can be attained through provision of a sphagnum cultivation base having a shape-imparted, aggregated mass of dried sphagnum and one or more units of live sphagnum whose stem portions have been aligned in bunch(es), such that the bunch(es) of live sphagnum stem is/are in contact with the aggregated mass of dried sphagnum, that the growth point of of live sphagnum is substantially exposed from the aggregated mass of dried sphagnum, and that the aggregated mass of dried sphagnum is capable of being brought into contact with water of a water basin, and through construction of a system on the basis of the base. The present invention can considerably contribute to environmental improvements, since, in particular, the present invention can grow sphagnum having a remarkable carbon dioxide fixation capacity.

## Description

### Technical Field

The present invention relates to a cultivation base for sphagnum.

### Background Art

Scientifically, sphagnum, or peat moss, is a moss plant which belongs to subclass *Sphagnidae.* There have been reported about 150 species belonging to one genus in one family worldwide, including about 36 species found in Japan. Sphagnum is known to be the economically most valuable moss plant, and in Japan, it is usually used for horticultural purposes.

Meanwhile, in high moors, peat develops on water tables, and, under thickly grown sphagnum, peat formed primarily from dead remains of sphagnum is known to accumulate to layers of several meters. Over a long period of several thousand years, such high moors have continued to fix enormous volumes of carbon dioxide, and thus are currently known to be a very important CO₂ absorption resource on the earth. Also, sphagnum bogs are known to provide precious habitats to animals and plants that can survive only in them.

Presently, for many reasons, high moors are rapidly disappearing, raising concerns that global warning might be accelerated by worldwide reduction in CO₂ fixation and that animals and plants which can survive only in a sphagnum bog might be decreased in number or endangered.

Under such circumstances, provision of means for cultivating sphagnum in large amounts with ease is awaited.

Heretofore, several methods for cultivating sphagnum have been reported (see, for example, The World of Green Gem "*Fuukiran*" (a variety of *Neofinetia falcata*), Internet <URL: http://www.fuukiran.jp/fuukiran/mizugoke/mizugoke2.htm>; "Wild grasses and other plants-sphagnum, Internet <URL: http://www3.plata.or.jp/Dionaea-Club/plants/sanyasou/mizugoke.htm>). However, none of the reported methods are suitable for large-scale cultivation, because care must always be taken so as not to allow the sphagnum to dry up, and moreover, the methods are not simple. Thus, these methods are considered to have disadvantages from the viewpoints of continued cultivation.

Incidentally, in relation to the present invention, a patent application has been filed regarding a sheet-like absorbent making use of excellent absorptive power of dry sphagnum (Japanese Patent Application Laid-Open (*kokai*) No. 8-126662).

An object of the present invention is to provide means for cultivating sphagnum on a large scale, with ease, and in a variety of environments; in other words, means for realizing a sphagnum bog in a variety of environments.

### Disclosure of the Invention

With an aim to attain the above-mentioned object, the present inventors started with an idea of using the excellent capacities of dried sphagnum in drawing up water from a water basin, and found that when the thus-drawn-up water is brought into contact with the stem of a live sphagnum plant body, efficient growth of a growth-point-bearing portion of a live sphagnum plant (such a portion is primarily a leaf or a branch) can be realized. The invention which broadly relate to cultivation of live sphagnum includes, among others, an invention drawn to a cultivation base which is needed for cultivation, and a cultivation method and cultivation system employing the cultivation base.

That is, in an aspect of the present invention which is drawn to the above-mentioned cultivation base, the present invention provides a sphagnum cultivation base (hereinafter may be referred to as the present sphagnum cultivation base) comprising a shape-imparted, aggregated mass of dried sphagnum and one or more units of live sphagnum, each of said unit(s) is a bunch of live sphagnum whose stems are bunched, the aggregated mass of dried sphagnum being in contact with the bunched stems of live sphagnum, a growth point of the live sphagnum being substantially exposed outside the aggregated mass of dried sphagnum, and the aggregated mass of dried sphagnum being maintained under condition that permit contact with water of a water basin.

In another aspect of the present invention which is drawn to the above-mentioned cultivation method, the present invention provides a sphagnum cultivation method (hereinafter may be referred to as the present cultivation method) which employs the present sphagnum cultivation base and comprises, while maintaining a growth point of a live sphagnum plant at a point above the water surface of a water basin, wetting the aggregated mass of dried sphagnum by bringing the mass into contact with the water of the water basin, and supplying the water that permeates the aggregated mass to wet the dried sphagnum to the live sphagnum, to thereby nurture the live sphagnum.

In yet another aspect of the present invention which is drawn to the above-mentioned cultivation system, the present invention provides a sphagnum cultivation system (hereinafter may be referred to as the present cultivation system) which employs the present sphagnum cultivation base and comprises, while maintaining a growth point of a live sphagnum plant at a point above the water surface of a water basin, wetting the aggregated mass of dried sphagnum by bringing the mass into contact with the water of the water basin, and supplying the water that permeates the aggregated mass to wet the dried sphagnum to the live sphagnum, to thereby nurture the live sphagnum.

In the present invention, the term "live sphagnum" refers to a sphagnum plant which exhibits life activities at least to some extent. In other words, the term "live sphagnum" should be considered to encompass both cultivated or wild sphagnum (containing sufficient amounts of water) and simply dried sphagnum, which has not undergone any sterilizing treatment by means of, for example, heating [note that although simply dried sphagnum is faded in color because chlorophyll is lost, unless a considerable period of time has passed, the moss can be revived if supplied with water (generally speaking, a drying period of not longer than about one month at normal temperature is considered to be the limit after which the moss having undergone the drying period can be revived)].

In the present invention, the term "dried sphagnum" refers to both the above-mentioned dried sphagnum which has undergone a sterilizing treatment and simply dried sphagnum. From viewpoints of economy, etc., dried sphagnum which has undergone a sterilizing treatment is preferably employed. In this connection, according to the present invention, it is essential that "dried sphagnum" contain water upon use of an invention product, and therefore, dried sphagnum which has come to contain water at any point in time; e.g., during manufacture or use of a product of the invention, should be construed as falling within the technical scope of the present invention.

The sphagnum―either live sphagnum or dried sphagnum―to which the present invention is applied may be any moss plant, so long as it belongs to the *Sphagnum* L. of *Sphagnaceae* in *Bryopsida, Bryophyta.* Some sphagnum examples of Japanese origin include *Sphagnum palustre* L., *Sphagnum papillosum* Lindb., *Sphagnum magellanicum* Brid., and *Sphagnum aongstroemii* C. Hartm., *Sphagnum compactum* DC., *Sphagnum microporum* Warnst. ex Card, *Sphagnum calymmatophyllum* Warnest. & Card., *Sphagnum subsecundum* Nees ex Sturm, *Sphagnum girgensohnii* Russow, *Sphagnum fuscum* (Schimp.) H. Klinggr., *Sphagnum fimbriatum* Wilson ex Wilson & Hook.f., *Sphagnum capillifolium* (Ehrh.) Hedw., *Sphagnum junghuhnianum* Dozy & Molk. Subsp. Pseudomolle (Warnest.) H.Suzuki, *Sphagnum tenellum* Hoffm., *Sphagnum cuspidatum* Hoffm., *Sphagnum recurvum* P. Beauv., and *Sphagnum squarrosum* Crome. Needless to say, sphagnum mosses originating from any region other than Japan may also be used in the present invention.

Of the listed mosses, *Sphagnum palustre* L. is a preferred sphagnum moss as either the "live sphagnum" or "dried sphagnum" in the present invention.

### Brief Description of the Drawings

Fig. 1 is a sketch of a live sphagnum moss.
Figs. 2 (1) to (4) show an exemplary process for producing a sphagnum cultivation base of a basic embodiment of the present invention.
Figs. 3 (1) to (5) show another exemplary process for producing a sphagnum cultivation base of the basic embodiment of the present invention.
Figs. 4 (1) and (2) show an exemplary process for producing a sphagnum cultivation base of the basic embodiment of the present invention in which two or more units of live sphagnum are employed.
Figs. 5 (1) and (2) show another exemplary process for producing a sphagnum cultivation base of the basic embodiment of the present invention in which two or more units of live sphagnum are employed.
Figs. 6 (1) to (4) show an exemplary process for producing a sphagnum cultivation base of an embodiment of the present invention employing a support.
Figs. 7 (1) to (3) show another exemplary process for producing a sphagnum cultivation base of an embodiment of the present invention employing a support.
Figs. 8 (1) to (3) show an exemplary process for producing a sphagnum cultivation base of an embodiment of the present invention employing a constructive design.
Figs. 9 (1) to (6) schematically show the growing process of live sphagnum, in which the moss plants form a raised mound (hereinafter simply referred to as "hillock") in the vicinity of the depression and grow with accelerated speed.
Figs. 10 (1) to (4) show embodiments employing addition components.
Figs. 11 (1) and (2) are a partial sectional elevation showing a sphagnum cultivation system of the present invention to which addition components are added to form an add-on flat surface.
Figs. 12 (1), (2), (3)-1, (3)-2 and (3)-3 show an embodiment of the present cultivation system, in which the present sphagnum cultivation base is installed in a water basin.
Figs. 13 (1) to (5) show an embodiment in which the present sphagnum cultivation base is installed in a hole formed in the ground or a concrete surface.
Fig. 14 shows an embodiment of an artificial cultivation field for cultivating sphagnum.
Figs. 15 (1) to (3) show an example of the present sphagnum cultivation base employing a bucket-shaped support.
Fig. 16 shows an embodiment of the present cultivation system employed in a fallow rice field or a similar site.
Figs. 17 (1) to (6) show an embodiment of the present cultivation system in which the present sphagnum cultivation base is installed above the bottom of a water basin through use of a hanging device.
Figs. 18 (1) to (4) show another embodiment employing a hanging device.
Fig. 19 shows an exemplary use of the present cultivation system installed on a slope.
Figs. 20 (1) and (2) show an embodiment of the present cultivation system in which the present sphagnum cultivation base floats near the water surface of a water basin with a buoyant force.
Figs. 21 (1) and (2) show a large-scale application of the present cultivation system in which the present sphagnum cultivation bases float near the water surface of a water basin with a buoyant force.
Figs. 22 (1) to (3) show an embodiment of the present sphagnum cultivation base employing a lightweight material such as expanded polystyrene.
Fig. 23 (1) shows another embodiment of the present sphagnum cultivation base employing a lightweight material such as expanded polystyrene.

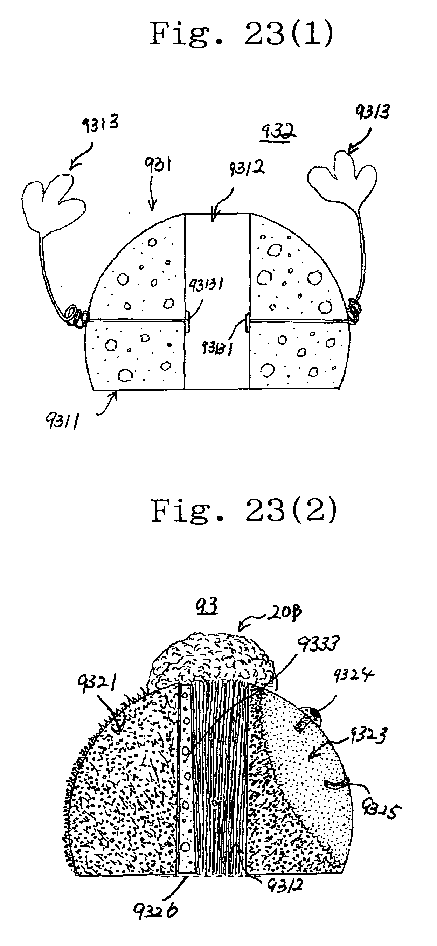

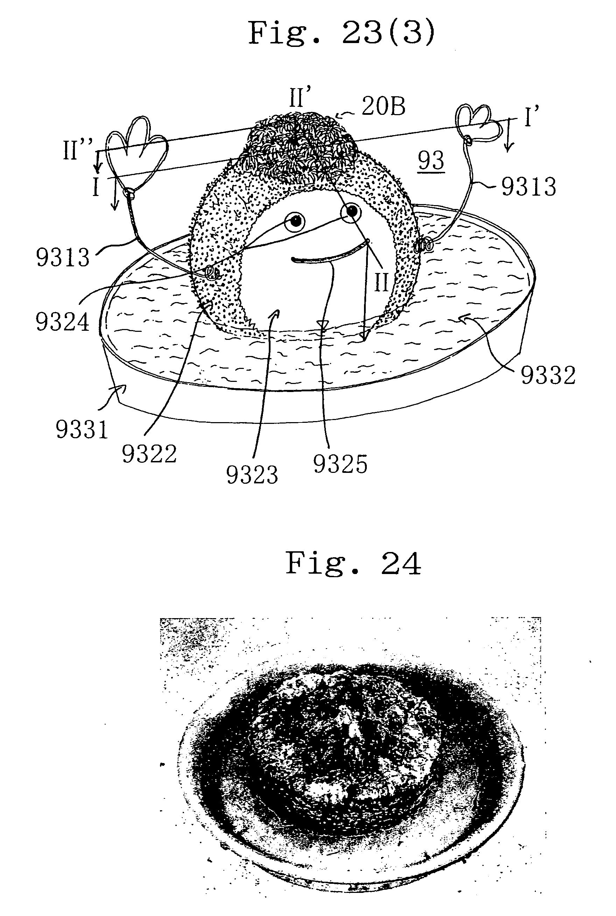

Fig. 23 (2) shows another embodiment of the present sphagnum cultivation base employing a lightweight material such as expanded polystyrene.
Fig. 23 (3) shows another embodiment of the present sphagnum cultivation base employing a lightweight material such as expanded polystyrene.
Fig. 24 is a photograph showing an actual sphagnum cultivation base according to a first embodiment of the present invention.

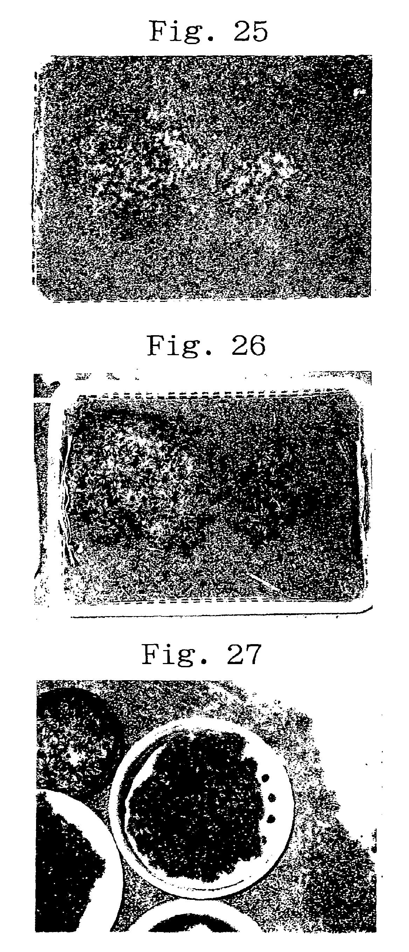

Fig. 25 is a photograph showing the initial stage of a growth test employing a sphagnum cultivation base according to the first embodiment of the present invention.
Fig. 26 is a photograph showing the final stage of the growth test employing the sphagnum cultivation base according to the first embodiment of the present invention.
Fig. 27 is a photograph showing the final stage of the growth test employing a floating sphagnum cultivation base of the invention.

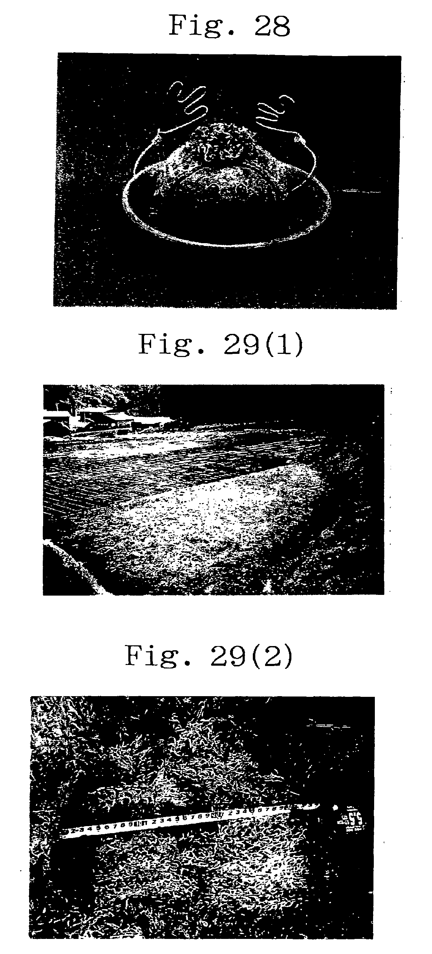

Fig. 28 is a photograph showing an actual product of a sphagnum cultivation base according to a second embodiment of the present invention, where the base is designed to have an amusing appearance.
Fig. 29 (1) is a photograph showing the results of large-scale cultivation of sphagnum moss.
Fig. 29 (2) is another photograph showing the results of large-scale cultivation of sphagnum moss.

### Best Mode for Carrying Out the Invention

### <The sphagnum cultivation base of the present invention>

The present sphagnum cultivation base at least includes the following (1) and (2): (1) a shape-imparted, aggregated mass of dried sphagnum (hereinafter may be referred to as "dried-sphagnum molded product") and (2) live sphagnum.

### (1) Dried-sphagnum molded product

The dried-sphagnum molded product literally refers to a product formed of dried sphagnum which is molded into a certain shape. No particular limitation is imposed on the shape of the dried-sphagnum molded product, and the dried-sphagnum molded product may be formed to any shape, so long as the molded product holds live sphagnum such that the level of the growth points of the live sphagnum is higher than the water level of a water basin, in the cultivation method and cultivation system of the present invention described later. For example, according to one typical embodiment, a depression is formed in the dried-sphagnum molded product, and one or more units of bunched stems of live sphagnum are inserted into the depression under compressed condition, and the growth points of the live sphagnum are substantially exposed from the depression of the dried-sphagnum molded product. On the basis of this embodiment, a specific dried-sphagnum molded product may have a depression that receives densely collected stems of live sphagnum.

Next will be described the dried-sphagnum molded product. The molded product may be formed through the following methods, for example.

### a) Method for producing a dried-sphagnum molded product employing, as a binder component, a component which can be hardened afterwards (hereinafter may be referred to simply as "hardenable component")

Examples of the "hardenable component" include clay mixed with a solvent such as water, and paper fibers mixed with a solvent such as water. Of these, paper fibers mixed with water are preferred. That is, the dried-sphagnum molded product is preferably molded by use of a binder containing at least paper fiber.

The paper fiber may be provided as, for example, shredded paper or a paper precursor. "Shredded paper" refers to a product obtained by literally shredding a paper material, and no particular limitation is imposed on the type of the paper material. Examples of the type of the paper material which may be employed include newspaper, sanitary paper, magazines, flyers, and copy paper. Alternatively, kenaf paper (i.e., paper produced from kenaf fiber through a production process similar to that employed in production of normal paper) may be employed. The expression "shredded" refers to a state in which a paper material is cut so that the paper material is partially or entirely reduced to individual paper fibers. No particular limitation is imposed on the shredding method. Shredded paper may be prepared through shearing in water through use of a shear blade, abrasion in water through use of a file blade, crumbling with hands in water, or a similar technique.

The paper precursor refers to a water-containing fibrous material of plant origin which may be directly transformed to paper and is obtained through a refining process of pulp.

No particular limitation is imposed on the ratio of paper fiber to water. However, the ratio of paper fiber (dry basis) to water by mass is typically about 1:4000 to about 1:10, preferably about 1:3000 to about 1:500.

In addition to the above paper fiber and water, other components may be incorporated into the hardenable component in accordance with needs. Examples of the components include fine soil matter (i.e., minute substances whose forms resemble soil) such as gravel, sand, soil, earthenware powder, glass powder, ash, lightweight aggregate, clay, peat moss, and perlite, and water-permeable viscous binder components such as starch. In addition, for example, plant fibers (excluding paper fibers), dried sphagnum moss, or seeds of plants may be incorporated.

Alternatively, the dried-sphagnum molded product may be produced by separately preparing a hardenable component, and combining the hardenable component with an aggregated mass of dried sphagnum (through, for example, applying the hardenable component to the dried sphagnum) when the present sphagnum cultivation base is produced. Alternatively and preferably, the dried-sphagnum molded product is produced by preparing, in advance, a composition containing a hardenable component and dried sphagnum, and the thus-obtained composition is employed in the manufacture of the present sphagnum cultivation base.

For example, when a water-containing composition containing paper fiber or a similar substance described above (hereinafter simply referred to as "paper fiber") is employed as a hardenable component, preferably, the paper fiber and dried sphagnum are mixed together at a ratio by mass (paper fiber : dried sphagnum (dry basis)) of about 1:100 to about 1:20, and the mixture is mixed with water in an amount of about 1 to about 20 mass% with respect to the resultant mixture.

### b) Method for producing a dried-sphagnum molded product employing a depression of a support

"Support" refers to an object which has a certain shape when left to stand (including an object which changes its shape upon application of a driving force produced, for example, by electric power) . No particular limitation is imposed on the shape of the support, so long as a depression capable of securing dried sphagnum in a certain shape can be formed in the support. In addition, no particular limitation is imposed on the raw material for forming the support. Examples of the raw material which may be employed include wood, stone, plastic, expanded polystyrene, rubber, metal, bisque, earthenware, porcelain, clay, carbon fiber, glass, pumice, and charcoal. It should be noted that portions of the support with which the live sphagnum is brought into direct contact (for example, as described later, "a flat and/or curved surface which extends substantially continuously from the opening of the depression formed in an aggregated mass of dried sphagnum or a support in which live sphagnum is fitted") are preferably formed of a raw material containing substantially no nutrients for organisms. Specific examples of the raw material containing no nutrients of organisms include the above-described substances. However, lumber, paper clay, leaf mold soil, and similar materials may not be preferred as a raw material for forming the support (at least the portion with which live sphagnum is brought into direct contact), since they contain microorganism-assimilable carbon sources in non-negligible amounts; particularly, bacteria, fungi, algae, moss plants other than sphagnum, and other microorganisms which compete with sphagnum in growth.
b-1) When the depression of the support is a through-hole extending through the support, the "dried-sphagnum molded product" which is in contact with the live sphagnum is substantially exposed at the bottom of the cultivation base. When the aggregated mass of dried sphagnum which has been substantially exposed is brought into contact with water of a water basin, water infiltrates the dried-sphagnum molded product and then moves, through the boundary at which the live sphagnum and the dried sphagnum are in mutual contact, to the live sphagnum, whereby the live sphagnum is supplied with water. In another embodiment, both live sphagnum and dried sphagnum may be brought into direct contact with water of a water basin. In this embodiment, however, filtering capacities-for removing debris or impurities in soaking water-of dried sphagnum are not utilized by live sphagnum. In other words, in a preferred embodiment, only the aggregated mass of dried sphagnum is brought in contact with water of a water basin, and the live sphagnum is supplied with water which has passed through the dried sphagnum, whereby the live sphagnum is supplied with water filtered through the dried sphagnum.

In particular, when water is fed to the water basin from a water source which may abundantly contain microorganisms, such as a eutrophic lake or marsh, a muddy river, or recycle water produced by simple treatment of sewage, the live sphagnum may be brought into contact with water and the microorganisms contained therein. Therefore, when the water source of the water basin is a possibly microorganism-enriched one as described above, the support is preferably formed from a water-impermeable material such as stone, plastic, expanded polystyrene, rubber, metal, earthenware, porcelain, clay, carbon fiber, or glass. In such a case, if the support is made from a water-permeable material, such as bisque, paper clay, gravel, pumice, or a water-permeable composition (described later), preventive measures are preferably taken. That is, a water-impermeable material (e.g., a water-impermeable vinyl polymer sheet) is placed between the live sphagnum and the water-permeable material, so as to prevent passage of water between the water-permeable support and the live sphagnum.
b-2) Among the above water-impermeable materials for forming a support, expanded polystyrene is advantageous, since expanded polystyrene is water-impermeable, contains substantially no nutrients for organisms, can be readily processed to form a desired shape, is lightweight, and is easy to handle. In addition, expanded polystyrene floats on water. Therefore, in an embodiment in which a sphagnum cultivation base of the present invention is floated on water, the support is preferably made from expanded polystyrene. However, with expanded polystyrene, product can hardly be imparted with a natural impression. For example, even when a colored paint is applied to surfaces of a product made of expanded polystyrene, unnatural impression may not be completely eliminated.

In such a case, the following steps α) to δ) (the steps can be applied to any substances, including expanded polystyrene, which can form a support of the present sphagnum cultivation base) may be performed on the surfaces of the product, whereby a product made of expanded polystyrene or a similar substance will be imparted with a natural appearance.
α) To the surface of the support made of expanded polystyrene or a similar substance, there is applied a liquid substance which is hardened afterwards and is viscous before hardening. Examples of the curable substance include adhesives such as silicone adhesives, urethane adhesives, vinyl acetate adhesives, cellulose adhesives, synthetic rubber adhesives, ultraviolet-curable adhesives, anaerobic adhesives, and ultraviolet anaerobic adhesives, with silicone adhesives being preferred.

No particular limitation is imposed on the method for applying the liquid substance to surfaces. For example, a liquid substance contained in an injection container (e.g., an injection tube) is injected onto a surface of the support, and the injected liquid substance is leveled through use of a coater or a similar tool. When a thin layer is to be formed, the liquid substance may be applied through use of a brush.
β) Subsequently, the surface of the liquid substance layer is napped. No particular limitation is imposed on the method for napping the surface. For example, the surface of the liquid substance layer may be napped through tapping of the surface by means of a napper (such as a metal wire brush), which is rigid.
γ) Thereafter, onto the nappy surface of the liquid substance layer are scattered fine soil matter (e.g., gravel, sand, soil, earthenware powder, glass powder, ash, lightweight aggregate, clay, peat moss, perlite), pigments, colorants, moss, green algae, or other substances.
Subsequently, excessive scattered substances are preferably removed by washing the surface with a water flow obtained from tap water and having pressure controlled via a shower nozzle. Subsequently, the surface is leveled slightly, and the liquid substance is hardened (through drying, UV-irradiation, formation of anaerobic atmosphere, or a similar technique, depending on the type of the curable substance), to thereby form a surface having a natural texture, like that of an earthen wall, on the support. Alternatively and preferably, a precursor composition of a water-permeable composition described below may be employed as the fine soil matter.
δ) The surface produced in γ) above may be covered by a coating film. The coating film is preferred for preventing nutrients of microorganisms present on the surface of the support from appearing on the formed surface. However, when the substance scattered to the support is an organism such as a green algae or a moss other than sphagnum, the coating process inhibits life activities of the organism and is therefore not preferred (in this case, the moss other than sphagnum and live sphagnum may compete in growth). The coating film may be formed by applying a desired coating material to the surface, and drying and solidifying the coating material. No particular limitation is imposed on the coating material, and any product available as glaze may be employed. Preferably, the coating material maintains its transparency as long as possible and is as highly safe as possible. For example, a water-thinnable acrylic resin agent (e.g., product of Atomix, Inc.) sold as a water-thinnable coating base stabilizer is particularly preferably employed as the coating material. In addition, the coating material may be waterproofed in accordance with needs by, for example, applying a silicone coating agent to the upper surface of the coating material.

Through the above steps α) to δ), the surface of a support made of expanded polystyrene or a similar substance can be modified to give a natural impression.
b-3) Preferred examples of a raw material of the water-permeable substance include "a composition containing 'shredded paper and/or a paper precursor' (hereinafter may be referred to simply as 'shredded paper or the like') and fine soil matter" (hereinafter the composition may be referred to as a water-permeable composition).

The water-permeable composition is an energy-saving material obtained from natural sources, which material needs no heat treatment in production of a support product.

The terms "shredded paper," "paper precursor," and "fine soil matter" have the same meanings as described above.

In production of a support product, water is necessarily added to the water-permeable composition.

Specifically, the water-permeable composition is derived from a precursor composition. That is, firstly, a precursor composition containing "shredded paper or the like," fine soil matter, and water is prepared, and the water-permeable composition is formed from the precursor composition.

No particular limitation is imposed on the ratio of "shredded paper or the like" to fine soil matter contained in the water-permeable composition or a precursor composition thereof. However, the ratio by mass of "shredded paper or the like" : fine soil matter is preferably about 1:2 to about 1:4. When the amount of the "shredded paper or the like" is excessively large, the water-permeable composition itself is fragile, and the formed support may assume the color of the raw material paper, which is not adequate in terms of color design of the support. When the amount of the fine soil matter is excessively large, the base composition of the water-permeable composition exhibits lowered binding performance and therefore cannot be hardened stably through drying, and cost per volume of the compositions also tends to increase.

The fine soil matter incorporated into the water-permeable composition preferably contains clay. No particular limitation is imposed on the amount of clay incorporated. The fine soil matter may be formed of only clay. However, typically, the ratio by mass of clay to fine soil matter other than clay is preferably about 1:10 to about 1:1.

No particular limitation is imposed on the ratio of the "shredded paper or the like" and fine soil matter to water contained in the precursor composition of the water-permeable composition, and any ratio may be selected. However, the ratio is typically about 1 to about 30 mass%, preferably about 3 to about 25 mass%, on the basis of the entirety of the precursor composition. When the amount of water contained is excessively small, shredding of paper to form shredded paper is difficult, and shredded paper and fine soil matter cannot be kneaded thoroughly. When the amount of water is excessively large, the precursor composition is so heavy that an excessively large load is imposed to workers preparing the composition, while wasting an unnecessarily large amount of water.

In accordance with needs, the water-permeable composition may contain, in addition to the above essential components, other components such as plant fibers (e.g., root portions of plants such as roots forming a root-spread surface and cut pieces of root), straws, ground garbage, charcoal pieces, ore stones, plant seeds, and dried sphagnum.

The water-permeable composition may contain a moss plant (other than dried sphagnum) in such a manner that the moss plant is exposed from the surface of the water-permeable composition.

Specifically, a water-permeable composition containing a desired moss plant can be prepared by incorporating the moss plant into a precursor composition of the water-permeable composition.

The moss plant may be those living in a natural field or those obtained through cultivation. Alternatively, the moss plant may be the so-called "cultured moss plant" produced through the culture method [see, for example, "Plant biotechnology II," Tokyo Kagaku Dozin: Gendai-Kagaku extra number 20, p. 39, "Culture of plants belonging to the family *Bryophyta*" described by Ono]. Typically, moss plants obtained through cultivation are preferred.

No particular limitation is imposed on the species of the moss plant which may be incorporated into the water-permeable composition.

Examples of employable moss plants include, but are not limited to, Atrichum P. Beauv. (Tachigoke-zoku) such as Atrichum undulatum (Hedw.) P. Beauv (Namigata-Tachigoke); Pogonatum P. Beauv (Niwa-sugigoke-zoku) such as Pogonatum inflexum (Lindb.) Lac. (Ko-sugigoke); Polytrichastrum G. L. Smith (Miyama-sugigoke-zoku) such as Polytrichastrum formosum (Hedw.) G. L. Smith; Polytrichum Hedw. (Sugigoke-zoku) such as Polytrichum commune Hedw. (Uma-sugigoke); Ceratodon Bird. (Yanouenoaka-goke-zoku) such as Ceratodon purpureus (Hedw.) Bird. (Yanoueno-akagoke); Dicranum Hedw. (Shippogoke-zoku) such as Dicranum japonicum Mitt.(Shippogoke), Dicranum nipponense Besch (O-shippogoke), Dicranum scoparium Hedw. (Kamojigoke), Dicranum polysetum Sw. (Nami-shippogke); Leucobryum Hampe (Shiragagoke-zoku) such as Leucobryum scabrum Lac. (O-shiragagoke), Leucobryum juniperoideum (Brid.) C. Mull. (Hosoba-okinagoke); Bryum Hedw. (Hariganegoke-zoku) such as Bryum argenteum Hedw. (Gingoke); Rhodobryum (Schimp.) Hampe (Kasagoke-zoku) such as Rhodobryum giganteum (schwaegr.) Par. (O-kasagoke) ; Plagiomnium T. Kop. (Tsuru-chochingoke-zoku) such as Plagiomnium acutum (Lindb.) T. Kop. (Kotsubogoke); Trachycystis Lindb. (Kobano-chochingoke-zoku) such as Trachycystis microphylla (Dozy et Molk.) Lindb. (Kobano-chochingoke); Pyrrhobryum Mitt. (Hinokigoke-zoku) such as Pyrrhobryum dozyanum (Lac.) Manuel (Hinokigoke); Bartramia Hedw. (tamagoke-zoku) such as Bartramia pomiformis Hedw. (O-tamagoke) ; Climacium Web. et Mohr (Koyano-mannengusa-zoku) such as Climacium dendroides (Hedw.) Web. et Mohr (Furoso), Climacium japonicium Lindb. (Koyano-mannengusa); Racomitrium Brid. (Shimofurigoke-zoku) such as Racomitrium ericoides (Web. et Brid) Brid (Haisunagoke), Racomitrium japonicium Dozy et Molk. (Ezosunagoke), Racomitrium canescens (Hedw.) Brid. ssp. Latifolium (Sunagoke), Racomitrium barbuloides Card. (Kobanosunagoke); Hypnum Hedw., nom. cons. (Haigoke-zoku) such as Hypnum plumaeforme Wils. (Haigoke); Thuidium Bruch et Schimp. in B. S. G. (Shinobugoke-zoku) such as Thuidium Kanedae Sak. (Toyama-shinobugoke). In many cases, these mosses favor a growth environment different from that favored by sphagnum. Therefore, moss plants which will go with sphagnum must be carefully selected, considering various factors such as optimum growth pH.

These moss plants may be employed singly or in combination of two or more species.

When a water-permeable composition containing a moss plant is used as the dried-sphagnum molded product of the present sphagnum cultivation base, at least at the point in time when the base product is completed, the moss plant is preferably exposed from the surface of the water-permeable composition, from the viewpoint of ensuring photosynthesis of the moss plant and appearance of the base.

In order to expose a moss plant, firstly, the amount of the moss plant contained in the water-permeable composition may be increased. Specifically, the moss plant is incorporated into the water-permeable composition in an amount of about 2 to about 15 times (by mass) the total amounts of the other components. When the amount of the moss plant is less than twice the amount of the other components, the other components (paper fiber, fine soil matter, and dried sphagnum) cover a larger area of the surface of the water-permeable composition, preventing sufficient photosynthesis of the moss plant. When the amount of the moss plant exceeds 15 times the amount of the other components, fixation force of the moss plant to the water-permeable composition tends to be weak.

In a second method, while the amount of the moss plant in the water-permeable composition is less than twice (by mass) (preferably, is 0.1 to 1 times) the amount of the other components, part of the moss plant that is located near the surface of the formed water-permeable composition is positively exposed through any of various methods.

For example, in a method 1), the formed water-permeable composition is dried, and the surface of the composition is planed by means of an electric-powered tool equipped with a file or a similar tool. Alternatively, in the most preferred method 2), in the course of molding a water-permeable composition, a water flow is applied to the surface of the precursor composition before complete loss of moisture.

The exposure method 2) is considerably advantageous in that the moss plant can be effectively exposed and that the exposure process generates no dust, which may otherwise be formed through peeling or a similar technique.

In the exposure method 2) employing a water flow, when the water flow is applied to the precursor composition, the precursor composition still contains moisture; i.e., the precursor composition is in the state of "before solidified." Therefore, if a typical precursor composition containing no moss plant is employed, the entire precursor composition may be disintegrated by the water flow. However, disintegration of the entire precursor composition is prevented, since the water flow is weakened by part of the moss plant that is located near the surface of the precursor composition to which the water flow is applied. Therefore, only fine soil matter or "shredded paper or the like" present near the surface of the precursor composition is removed by the water flow. Thus, the exposure method 2) enables very easy exposure of the moss plant in a desired exposure state. Notably, the power of the water flow may be as low as that of a water flow obtained from typical household tap water in Japan, by mounting a hose equipped with a nozzle to the tap and allowing water to flow through the hose and the nozzle (although the water pressure of the thus-obtained water flow may be insufficient in the case where the volume of water supply is limited or in other cases where the tap water pressure is lowered).

When the water-permeable composition forms a sphere or a similar shape, exposure of a moss plant may be performed through the following steps: a precursor composition of a water-permeable composition is molded to a desired shape, a plurality of the molded products that have not been completely dried are placed in a water bath equipped with a water-flow-generating mechanism such as a washing machine, and a water flow is generated to cause the water flow and the water-permeable composition molded products to be brought into contact with one another, to thereby expose the moss plant by the friction force generated therebetween. When the water-bath treatment is performed through use of a typical household washing machine, the water-permeable composition molded products are brought into contact with one another in the water stream for about 2 to about 10 minutes.

As described above, by molding a precursor composition of a water-permeable composition into a desired shape and drying the molded product, a support having the desired shape is provided.
b-4) When the depression of the support is not a through-hole extending through the support (i.e., the depression has a closed bottom), and the support has no passageway extending from the closed bottom to the bottom of the support, the support is required to be formed of a water-permeable material as described above for allowing passage of water through the support body from a water basin to the dried sphagnum placed in the depression. Examples of the water-permeable material include bisque, paper clay, gravel, and pumice. However, in this embodiment, when water of the water basin is obtained from a water source which abundantly contains microorganisms, such as a eutrophic lake or marsh, a muddy river, or recycle water produced by simple treatment of sewage, it is very likely that microorganisms are brought into contact with the live sphagnum.

### c) Other molding methods

Methods for molding dried sphagnum other than the methods described in a) and b) are exemplified as follows. For example, dried sphagnum may be imparted a shape (i.e., molded) by laying the individual dried sphagnum bodies one over another to have a desired shape, and binding the shaped plants through use of a wire material (e.g., cotton thread, silk thread, or metal wire), a film material, or a mesh material. "Molding" also encompasses packing, with dried sphagnum, a hole formed in the ground, a concrete surface, or a similar surface.

Alternatively, molding may be performed by forming an aggregated mass of dried sphagnum to a desired shape; setting any of the above moss plants on an area of the side surface, the area being proximate to the bottom of the mass and surrounding the mass [the area corresponding to the side determined in consideration of the aggregated mass of dried sphagnum when the present sphagnum cultivation base is placed in such an orientation as to grow sphagnum in the base (i.e., in a state enabling use of the base according to the present invention)]; covering the area with a transparent film; allowing the set moss plant to grow; and removing the transparent film. Through this process, the mass of the dried sphagnum can be molded through use of the moss plant set on a surrounding surface of the mass.

Alternatively, molding may be performed by, instead of planting the above moss plant, sowing seeds of a typical plant on an area of the side surface of the aggregated mass of dried sphagnum, the area being proximate to the top of the mass and surrounding the mass; allowing the seeds to spread roots in the dried sphagnum to form a root-spread surface; and removing the film and the seeds. Through the process, the mass of the dried sphagnum can be molded through use of the root-spread surface.

The above-described molding methods a) to c) may be employed singly or in combination of two or more methods. In particular, when a support is employed in the present sphagnum cultivation base, the molding method a) is preferably employed in combination.

### (2) Live sphagnum

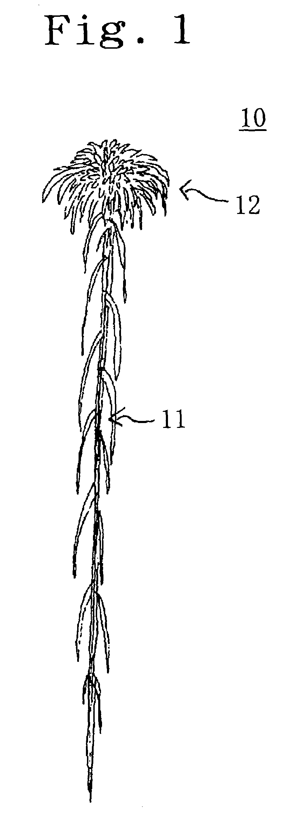

Fig. 1 shows a sketch of a sphagnum 10, which contains a stem or stem portion 11 and branches and leaves 12. In the present invention, the live sphagnum containing, at least, a stem portion having a growth point is preferably used.

The "stem portion having a growth point" means the following: even if the stem of live sphagnum is cut along a plane within a stem portion having a "growth point," the plant body of the live sphagnum can extend from the cut plane. Specifically, the present sphagnum cultivation base preferably employs sphagnum containing stems having a length of about 2 cm or more. The live sphagnum containing leaves (leaf-like portions) and branches (branched portions) is preferred, from the viewpoint of design, but it may be the case that the live sphagnum contains neither leaves nor branches. So long as the live sphagnum contains a stem portion having a growth point, cultivation of sphagnum can be performed through use of the present sphagnum cultivation base (leaves and branches themselves can also grow). Whether or not a stem portion or a similar portion has a growth point can be determined by detecting, with the naked eye, the presence or absence of a greenish color in a cut plane of the stem or a similar portion. Specifically, the presence of a greenish color reveals that the stem portion contains a growth point, whereas the absence of a greenish color reveals that the stem portion contains substantially no growth point.

When stems of live sphagnum are referred to as being "bunched" or "densely collected," it means that a plurality of live sphagnum bodies are gathered with their stems aligned. Typical examples of this mode include bundled stems. The stems may or may not be entangled with one another. In addition, the "bunched stems" or "bunch of stems" may be formed from a single live sphagnum plant by folding the stem of the sphagnum. Preferably, the "bunched stems" employed in the present sphagnum cultivation base, etc. has stems under compressed conditions, since the stems under compressed conditions are advantageous in forming a raised mound of live sphagnum (also known as "hillock"), which will be described later.

The "bunch of stems" may be placed, in the present sphagnum cultivation base, at one or more sites and at one or more bunches per site. The site(s) may be located inside or outside the dried-sphagnum molded product. The "bunch of stems" is required to be in contact with the dried-sphagnum molded product so as to allow the live sphagnum to use, for growing, water absorbed by the dried-sphagnum molded product (soaking water) .

In addition, a portion of live sphagnum that contains a growth point is required to be substantially exposed from the dried-sphagnum molded product. This is because the growth point of the live sphagnum is required not to be submerged in water in the present sphagnum cultivation base, and the "not-submerged in water" conditions can be readily realized by substantially exposing the growth point of the live sphagnum from the dried-sphagnum molded product.

As used herein, "substantially exposing" means not only the state in which the live sphagnum is projected from the dried-sphagnum-moss, but also the state in which, for example, the live sphagnum has a length smaller than the depth of the depression formed in the dried-sphagnum molded product; i.e., the top end of the live sphagnum thus remains in the depression, as well as the state in which a space is provided above the support, corresponding to the live sphagnum so that the live sphagnum can grow to be exposed from the dried-sphagnum molded product.

In the present sphagnum cultivation base, as described above, the live sphagnum is exposed at a surface portion of the base. The aggregated mass of dried sphagnum is also required to be exposed to another or the remaining portion of the base, which is different from the live sphagnum-exposed portion. The exposed portion of the aggregated mass of dried sphagnum is also required to be connected to an area in contact with the live sphagnum in the present sphagnum cultivation base. The exposed portion of the dried sphagnum is brought into contact with water of a water basin to absorb water, and the absorbed water is allowed to infiltrate to the area in contact with the live sphagnum, whereby water is fed to the live sphagnum for growing the live sphagnum in the present sphagnum cultivation base.

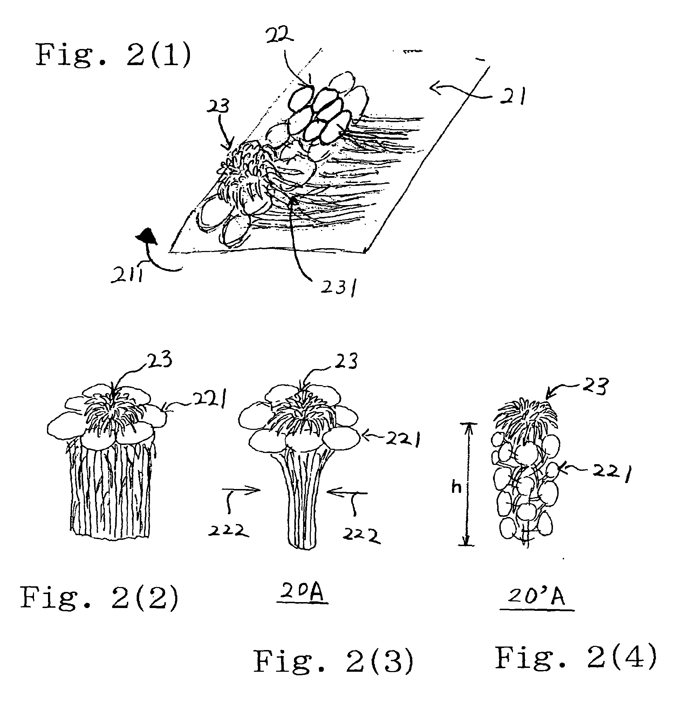

As described above, the present sphagnum cultivation base should have a portion formed of dried sphagnum, the portion being located at a site different from the exposure site of the live sphagnum and to be brought into contact with water of a water basin when the present sphagnum cultivation base is used. As described above, feeding water through the dried sphagnum to the live sphagnum is advantageous in that water is filtrated through the dried sphagnum to remove undesired components of the water basin (e.g., dirt), and the thus-obtained clean water can be fed to the live sphagnum. The effect of the filtration can be enhanced by increasing the total length of the dried sphagnum (the total length encompasses the longitudinal length of a single dried sphagnum plant and the total length of a plurality of dried sphagnum plants bound together in the longitudinal direction).
(3) Embodiments of the present sphagnum cultivation base
1) In a first embodiment, the present sphagnum cultivation base employs no support. Figs. 2 (1) to (4) show an exemplary process for production of a sphagnum cultivation base 20A, etc. of the present invention according to the first embodiment.

In Fig. 2 (1), for example, there is prepared a sheet 21 which rolls to wrap an object placed on the unfolded sheet and which preferably has openings which permit water present on the unfolded sheet to pass therethrough. On the unfolded sheet 21 is placed dried sphagnum 22 mixed with water and a water-containing composition which can be cured afterwards, such as paper fiber dissolved in water. On the dried sphagnum, a (preferably two or more) live sphagnum 23 is placed such that the stem thereof 231 is located atop the dried sphagnum 22 and that the leaves and branches 231 of the live sphagnum 23 are located outside the dried sphagnum 22. Subsequently, the sheet 21 is rolled in the direction indicated by arrow 211 and then removed. Fig. 2 (2) shows the product obtained by removing the sheet 21, the product containing the live sphagnum 23 and an aggregated mass of dried sphagnum surrounding the stem 231 of the live sphagnum 23. Thereafter, the aggregated mass of dried sphagnum 221 containing the water-containing composition is compressed in the direction indicated by arrows 222, thereby producing a sphagnum cultivation base 20A of the present invention [Fig. 2 (3)]. The shape of the thus-produced sphagnum cultivation base 20A is maintained by a binder component (such as paper fiber) in a water-containing composition which is hardenable later on. Subsequently, the sphagnum cultivation base 20A is dried for removal of moisture contained in the hardenable, water-containing composition contained in the aggregated mass of dried sphagnum 221, whereby the binder component can bind the dried sphagnum plants 221 together more tightly. Thus, a sphagnum cultivation base 20'A of the present invention [Fig. 2 (4)] can be prepared. In the present sphagnum cultivation base 20'A undergoing drying, the live sphagnum 23 is dried. However, so long as the live sphagnum 23 is confirmed, with the naked eye, to assume a greenish color, the live sphagnum 23 can be grown by bringing the aggregated mass of dried sphagnum 221 into contact with water of a water basin. If the live sphagnum 23 loses such greenish color, the live sphagnum 23 is difficult to grow even when water is supplied.

Thus, there can be produced a sphagnum cultivation base of the present invention, containing live sphagnum 23 and the aggregated mass of dried sphagnum 221 which is molded, the stem 231 of the live sphagnum 23 being in contact with the inside of the molded product.

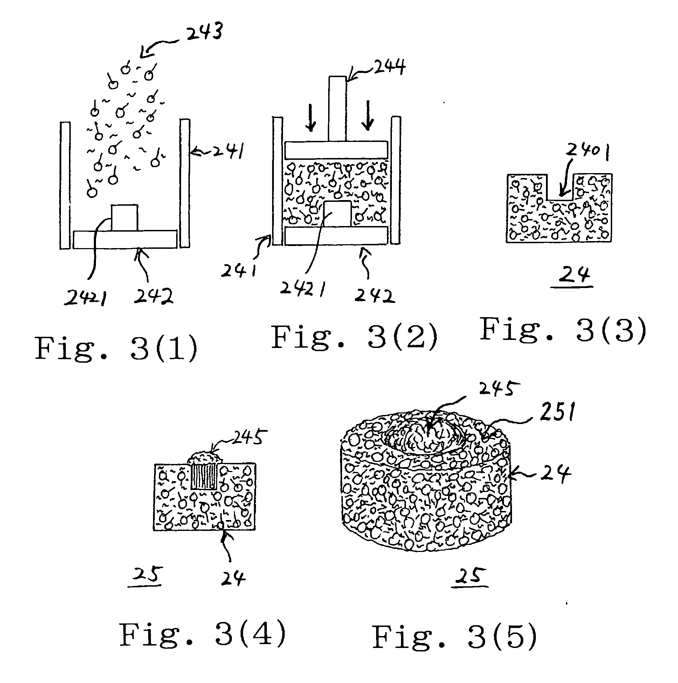

Alternatively, a sphagnum cultivation base of the present invention may be produced by preparing a dried-sphagnum molded product and fixing a bunch of live sphagnum whose stems are bunched to the molded product with bringing the bunched stems (i.e., densely collected stems) into contact with the molded product. Accordingly, there is provided "a sphagnum cultivation base comprising a shape-imparted, aggregated mass of dried sphagnum having a depression, one or more units of the bunched stems of live sphagnum are inserted into the depression, preferably under compressed condition or tightly, and a growth point of the live sphagnum is substantially exposed from the depression of the aggregated mass of dried sphagnum." For example, as shown in Figs. 3 (1) to (5), there are prepared a hollow cylindrical member 241 having open ends and a circular bottom plate 242 having a projection 2421. The circular bottom plate 242 can be assembled to and removed from the hollow cylindrical member 241. The bottom plate 242 is assembled to the hollow cylindrical member 241 such that the projection 2421 is located inside the hollow cylindrical member, to thereby form a bottom of the hollow cylindrical member. Into the inside space of the cylindrical member, a water-containing composition 243 containing dried sphagnum is poured [Fig. 3 (1) : sectional elevation]. Subsequently, the water-containing composition 243 is compressed from the upper thereof through use of a push plate 244 which slides along the inner wall of the hollow cylindrical member 241 for removal of water contained in the composition [Fig. 3 (2): sectional elevation]. Thereafter, a dried-sphagnum molded product 24 is obtained from the hollow cylindrical member 241 [Fig. 3 (3): sectional elevation]. The dried-sphagnum molded product 24 has a depression 2401 formed at a place corresponding to the projection 2421. The stem bunch of live sphagnum 245 is fit in the depression, preferably in a compressed manner, to thereby produce a sphagnum cultivation base 25 of the present invention [Fig. 3 (4): sectional elevation, Fig. 3 (5): perspective view].

Alternatively, the method for producing the present sphagnum cultivation base shown in Figs. 2 (1) to (4) may be modified as follows. For example, in the step performed prior to rolling of the sheet in the direction indicated by arrow 211, a rod member (not shown) is placed on dried sphagnum instead of the live sphagnum 23, and the sheet is rolled. Subsequently, the rod member is removed from the aggregated mass of dried sphagnum, to thereby produce a dried-sphagnum molded product having a depression formed therein at a place corresponding to the rod. A stem bunch 231 of the live sphagnum 23 is fitted into the depression of the dried-sphagnum molded product, thereby producing a sphagnum cultivation base of the present invention.

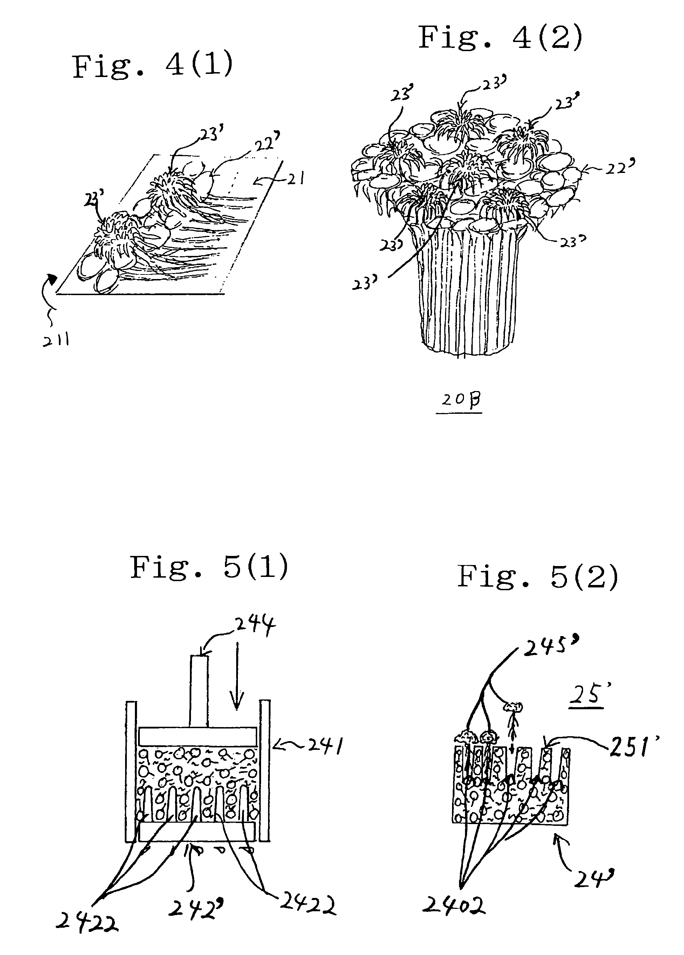

It should be noted that, although one unit of live sphagnum 23 is employed in these examples, two or more units of live sphagnum 23' may be employed as shown in Figs. 4 (1) and (2). Specifically, two or more units of live sphagnum 23' are processed in a manner similar to that shown in Figs. 2 (1) to (4) [Fig. 4 (1): wrapping step], to thereby form a sphagnum cultivation base 20B of the present invention in which stems of the two or more units of live sphagnum 23' are in contact with the dried sphagnum 22' inside the dried-sphagnum molded product [Fig. 4 (2)].

Alternatively, instead of the bottom plate 242 having a single projection 2421 shown in Figs. 3 (1) and (2), a bottom plate 242' having a plurality of projections 2422 may be employed. Specifically, the general procedure shown in Figs. 3 (1) to (5) is performed through use of the bottom plate 242' [Fig. 5 (1)], to thereby form a dried-sphagnum molded product 24' having a plurality of depressions 2402. Into the depressions, a plurality of stem bunches of live sphagnum 245' are fitted, preferably in a compressed manner, to thereby produce a sphagnum cultivation base 25' of the present invention [Fig. 5 (2): sectional elevation].

As described above, the present sphagnum cultivation bases 20A and 20B are molded through use of the hardenable, water-containing composition. Alternatively or additionally, other methods may be employed to produce a sphagnum cultivation base of the present invention. For example, as described in c) above, an aggregated mass of dried sphagnum may be molded through use of a linear material (e.g., cotton thread, silk thread, metal wire) or a film material. Alternatively, an aggregated mass of dried sphagnum may be molded through use of a moss or a root-spread surface.

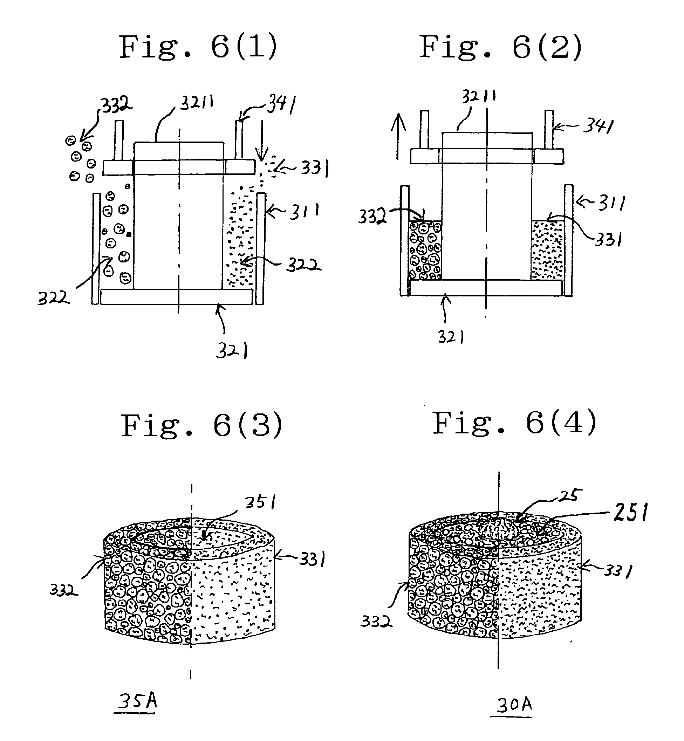

In the first embodiment, the height of the present sphagnum cultivation base [i.e., the height of the dried-sphagnum molded product when the base is placed for use, as measured from the bottom of the molded product to the exposed live sphagnum (the highest one when a plurality of live sphagnum plants are employed): the height corresponding to h in the case of the present sphagnum cultivation base 10A] is not higher than the maximum height to which the dried sphagnum can deliver water, and the height of the present sphagnum cultivation base may be appropriately determined in accordance with specific usages of the base. The height to which water can be delivered varies depending on the type, quality, or a similar factor of the dried sphagnum, and is difficult to determine accurately. However, typical height is about 60 cm. The sphagnum cultivation base of the present invention must have a certain height, since, for growth of the live sphagnum, the live sphagnum is required not to submerge in water of a water basin. There has already been reported a sphagnum cultivation performed at a height of 0 cm or thereabouts. The present sphagnum cultivation base is required to have a height of at least about 2 cm, preferably 5 cm or more. When the height is lower than about 2 cm, the live sphagnum is difficult to bring into steady contact with the aggregated mass of dried sphagnum in a stable manner, and in practice the live sphagnum cannot be maintained above water of a water basin.
2) In a second embodiment, the present sphagnum cultivation base employs a support. Figs. 6 (1) to (4) schematically show a production process of a sphagnum cultivation base 30A, etc. of the present invention according to the second embodiment.

In Fig. 6 (1), there are prepared a hollow cylindrical member 311 having open ends and a bottom plate 321 having a cylindrical projection 3211. The bottom plate 321 can be assembled to and removed from the hollow cylindrical member 311. The bottom plate 321 is assembled to the hollow cylindrical member 311 such that the projection 3211 is located inside the hollow cylindrical member, to thereby form a bottom of the hollow cylindrical member. Into the gap 322 formed between the cylindrical member 311 and the projection 3211, a precursor composition of a water-containing composition is poured. (Precursor compositions shown on the right side and the left side as viewed in each of Figs. 6 (1) to (4), 7 (1) to (3), and 8 (1) differ from each other. Specifically, the precursor composition 331 shown on the right side contains components as a slurry in water. The precursor composition 332 shown on the left side is in the form of grains of the precursor composition, the grains being obtained by, for example, removing moisture from the precursor composition 331, cutting the residue into pieces, and granulating the pieces to form fine particles. Practically and typically, the precursor compositions 331 and 332 are not employed simultaneously. However, these figures show these embodiments simultaneously). Subsequently, a ring push plate 341 which slides along the inner wall of the hollow cylindrical member 311 and the projection 3211 is placed in the gap 322, and the precursor composition 331 or 332 of the water-permeable composition is compressed through use of the push plate for removal of moisture and molding of the composition. After completion of compression, the ring push plate 341 is removed [Fig. 6 (2)], and the precursor composition molded product is collected and dried, to thereby produce a cylindrical support 35A formed of the water-permeable composition [Fig. 6 (3)]. For example, when the present sphagnum cultivation base 25 is pushed into the through-hole 351 of the support 35A, the sphagnum cultivation base 30A of the present invention in which an aggregated mass of dried sphagnum is molded in the support 35A can be obtained.

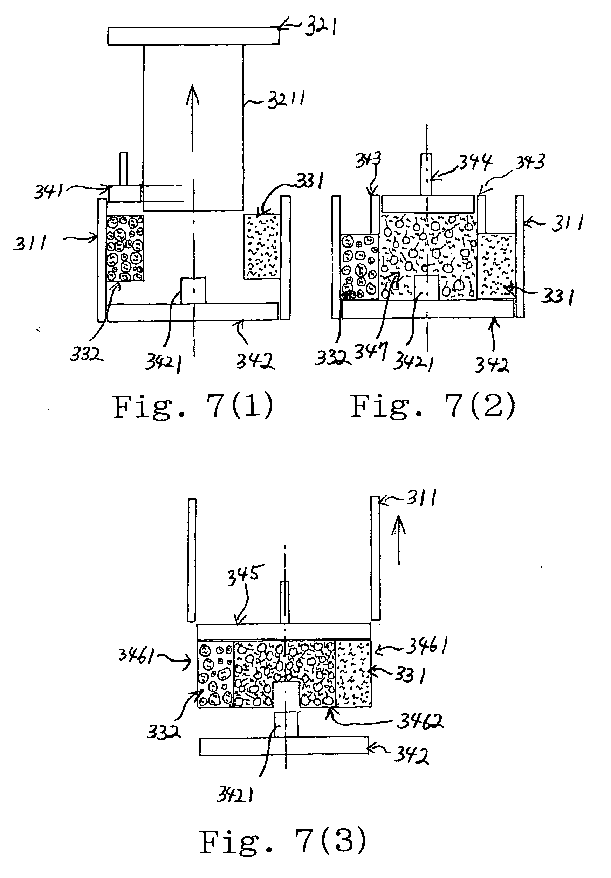

Alternatively, the support 35A and the dried sphagnum are molded in continuous steps. Specifically, the cylindrical member in the state shown in Fig. 6 (2) is inverted, and a circular bottom plate 342 having a projection 3421 is assembled to the new bottom (which served as the bottom in the previous step) of the cylindrical member 311 such that the projection 3421 is located inside the cylindrical member 311. The new bottom plate 342 can be assembled to and removed from the cylindrical member 311. Subsequently, the bottom plate 321 is removed, and the precursor composition 331 or 332 of the water-permeable composition is moved down toward the new-bottom plate 342 through use of the ring push plate 341 [Fig. 7 (1)]. The precursor composition 331 or 332 has been molded to form a hollow cylindrical member having a thicker wall on the bottom plate 321. On the molded composition 331 or 332, a hollow cylindrical member 343 having open ends and having an inner diameter identical to that of the hollow cylindrical member formed by the precursor composition 331 or 332 is placed such that the through-hole of the hollow cylindrical member 343 is aligned with the through-hole of the precursor composition 331 or 332. A mixture 347 of dried sphagnum and a hardenable component (preferably, a water-containing composition such as paper fiber) is poured into the combined through-holes, and then compressed through use of a push plate 344 which slides along the inner wall of the hollow cylindrical member 343 [Fig. 7 (2)]. Thereafter, the push plate 344 and the hollow cylindrical member 343 are removed. A molded product 346 is leveled through use of a push plate 345 which slides along the inner wall of the hollow cylindrical member 311 and can push the entire top surface of the molded product 346 (the entire top surface being defined by the inner wall of the hollow cylindrical member 311), and the hollow cylindrical member 311 and other members are removed. The column-shaped molded product contains a support 3461 formed of the precursor composition 331 or 332, and a dried-sphagnum molded product 3462 surrounded by the support 3461, the molded product 3462 having a depression formed at a bottom surface thereof [Fig. 7 (3)]. The shape of the dried-sphagnum molded product 3462 is maintained by both the through-hole of the support 3461 and the hardenable component such as a water-containing composition (e.g., paper fiber). A stem bunch of live sphagnum is fitted in the depression of the molded product 346, preferably in a compressed manner, to thereby produce the sphagnum cultivation base 30A of the present invention.

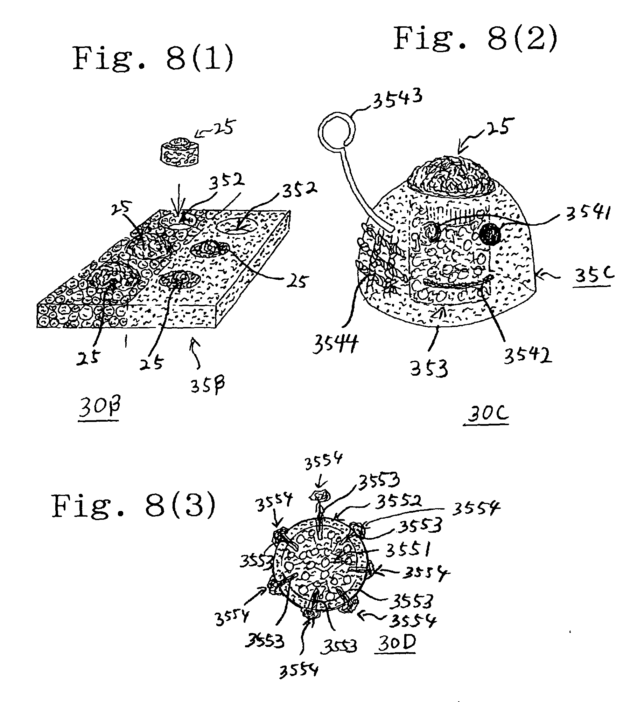

No particular limitation is imposed on the shape of the support. For example, as shown in Fig. 8 (1), a board 35B formed of a water-permeable composition and having a plurality of through-holes 352 bored therein is used as a support, and a unit of the present sphagnum cultivation base 25 of the present invention is pushed into each of the through-holes 352, to thereby produce a sphagnum cultivation base 30B of the present invention, in which a plurality of masses of dried sphagnum are molded in the support 35B.

Through use of differently designed supports, sphagnum cultivation bases can be produced in various forms. For example, in Fig. 8 (2), a support 35C has a hemispherical body having a round surface, formed of a water-permeable composition, having a diameter (as measured in the horizontal cross section) shrunken toward the top, and having a through-hole 353 extending from top to bottom. The present sphagnum cultivation base 25 is pushed into the through-hole 353, and colored member 3541 serving as eyes, a colored member 3542 serving as a mouth, and a metal wire 3543 having a loop portion formed at one end are inserted into and fixed to the support 35C. In addition, a part of the support 35C is covered with a knitted product 3544, to thereby produce a sphagnum cultivation base 30C decorated to resemble a face. Alternatively, as shown in Fig. 8 (3) (sectional elevation), dried sphagnum 3551 are molded to form a ball, and the dried sphagnum 3551 are covered with a water-permeable composition to form a ball-like support 3552 surrounding the dried sphagnum 3551. Depressions 3553 are formed on the surface of the ball-like support such that the depressions reach the interior of the dried sphagnum 3551. Stems of live sphagnum 3554 are fitted in the depression, preferably in a compressed manner, thereby producing a ball-like sphagnum cultivation base 30D of the present invention.

Also in the second embodiment, like the sphagnum cultivation base according to the first embodiment, the distance (height) between the present sphagnum cultivation base and the live sphagnum is not greater than the maximum height to which the dried sphagnum can deliver water, and, specifically, the maximum height is typically about 60 cm. The height is at least about 2 cm, preferably 5 cm or higher.

### <The cultivation method and cultivation system of the present invention>

The above-described sphagnum cultivation base of the present invention facilitates cultivation of sphagnum moss through implementation of the present cultivation method by use of the present cultivation system, and cultivation of sphagnum can promote improvement of the environment.

In the present cultivation method and cultivation system, a portion of the sphagnum cultivation base that differs from the exposed portion of live sphagnum; typically, an aggregated mass of dried sphagnum, is brought into contact with the water of a water basin, whereby the aggregated mass of dried sphagnum is saturated with water and the water (soaking water) is supplied to the live sphagnum. Meanwhile, the growth points of the live sphagnum (i.e., the portions that will grow as branches and leaves) must be maintained at the water surface of the water basin, or at a position higher than the water surface of the water basin.
(1) The term "water basin" is broadly defined as an area where water can exist to directly supply water to the present sphagnum cultivation base, and the water basin may be man-made or natural. That is, if natural, the water basin is generally defined as natural water basins such as lakes, marshes, moors, bogs, rivers, and groundwater zones; if man-made, the water basin is broadly defined as small-scale, man-made water basins such as plates, jars, and vats;
   comparatively large-scale man-made water basins such as water storage tanks, ponds, man-made rivers, man-made groundwater zones, pools, dams, and rice fields; or other man-made water basins produced according to a desired design.
(2) No particular limitation is imposed on the portion of the present sphagnum cultivation base which is brought into contact with the water of the water basin, so long as such contact at least enables the water of the water basin to contact the aggregated mass of dried sphagnum. In an example of the most basic embodiment, an aggregated mass of dried sphagnum is substantially exposed at the portion of contact with water. Here, the term "substantially exposed" means, in a case where the present sphagnum cultivation base is placed in the water basin, that the water of the water basin is in such a state that it can directly contact the aggregated mass of dried sphagnum. So long as this is the case, this expression naturally encompasses cases where the present sphagnum cultivation base is not used in combination with the above-described support, as well as cases where a support is employed, and the aggregated mass of dried sphagnum protrudes from the support, or a through-hole formed at a bottom portion of the support is filled so as to become level. However, in addition to this, cases where the through-hole is filled with an aggregated mass of dried sphagnum so as to define a depression also fall within the scope of "substantially exposed," so long as the aforementioned contact conditions with the water of the water basin are fulfilled. Further, a water-permeable material such as a sponge, water-permeable film, or meshed material or the like may be provided between the aggregated mass of dried sphagnum and the water of the water basin, to the extent that the water of the water basin can quantitatively and qualitatively contact the aggregated mass of dried sphagnum. Furthermore, the cross-sectional area of the region surrounding the entrance of the through-hole of this bottom portion may be the same as the cross-sectional area of the region surrounding the through-hole on the live sphagnum side. However, this cross-sectional area may be smaller than above, so long as an amount of soaking water sufficient for nurturing the live sphagnum is ensured in the aggregated mass of dried sphagnum. Cases where the cross-sectional area of the region surrounding the through-hole of the bottom portion is favorably made smaller than that of the live sphagnum side have been recognized, as this is a simple way to prevent slippage of the aggregated mass of dried sphagnum, and moreover, this enables conservation of the dried sphagnum.

As the present sphagnum cultivation base in which the aggregated mass of dried sphagnum can be substantially exposed ("substantially exposed" embodiment), examples include the above-described sphagnum cultivation bases 20A, 20B, and 25 of the first embodiment. By making these such that the live sphagnum is on top and placed in the water basin, and such that water contacts the aggregated mass of dried sphagnum exposed at the bottom portion, water is raised up through the dried sphagnum from this contact point to the vicinity of the live sphagnum, thus supplying water to the live sphagnum. By virtue of this action, the sphagnum is nurtured. Further, in the sphagnum cultivation bases 30A, 30B, and 30C of the second embodiment, each of the aggregated masses of dried sphagnum is exposed at the bottom portion of the through-hole provided in the support. By placing the aggregated mass of dried sphagnum on the water basin so that the bottom portions having through-holes are on the water, water contacts the aggregated mass of dried sphagnum exposed from the through-hole of the bottom portion. Water is drawn up from these contact points to the vicinity of the live sphagnum through the dried sphagnum and water supplied to the live sphagnum, whereby the sphagnum is nurtured. In this manner, in the sphagnum cultivation base of the second embodiment, the feature where the depression provided in the support is a through-hole is one of the simplest features that enables supply of water to the live sphagnum through the dried-sphagnum molded product.

It should be noted that in a possible configuration of the present sphagnum cultivation base 30D of the second embodiment and the above-described bases 30A to 30C, the through-hole is not provided, and the aggregated mass of dried sphagnum in the support appears to fit inside in a closed state. In a case such as this, for example, there is provided a water in-flow opening on the face side of the support which opening leads water from the face side to the side of the aggregated mass of dried sphagnum, and another opening on the side of the aggregated mass of dried sphagnum, the position of the water in-flow opening being higher than the position of the opening on the side of the aggregated mass of dried sphagnum, and this sphagnum cultivation base of the present invention is placed in the water basin where the water surface is higher than the opening of the face side. By making the water flow in from the exterior towards the aggregated mass of dried sphagnum and making the water contact the aggregated mass of dried sphagnum, the live sphagnum can be cultivated.

Moreover, when, for example, the material of the support is a water-permeable material, by placing the present sphagnum cultivation base on the water basin having a water surface higher than the lowest position of the aggregated mass of dried sphagnum at the inner side of the support, the water of the water basin penetrates the aggregated mass of dried sphagnum through the water-permeable material. This water having permeated further contacts the aggregated mass of dried sphagnum, whereby the live sphagnum can be cultivated.
(3) Further, the portions including the growth points of the live sphagnum; i.e., the portions that grow as branches and leaves, must be maintained at a position higher than that of the water surface of the water basin.

These conditions are for maintaining the present sphagnum cultivation base so that the portions including the growth points of the live sphagnum are substantially prevented from being submerged underwater. Here, the expression "substantially prevented from being submerged underwater" means that the portions including the growth points of the live sphagnum are not in such a state that they are constantly underwater. For example, in a case where the present sphagnum cultivation base is installed outdoors, temporary submersion of the growth points of the live sphagnum in water due to rainfall or the like is permissible. Further, the supply of water from above the present sphagnum cultivation base with shower water or the like is also permissible, so long as the growth of the live sphagnum is not inhibited.
(4) The present cultivation method and present cultivation system differ from conventional sphagnum cultivation systems employed only on a small scale in several points. In one such point, in the present invention, the aggregated mass of dried sphagnum acts as the water-absorption means of the live sphagnum. More specifically, with conventional techniques, dried sphagnum is thinly spread as is and used as a mere water-retaining material, and cultivation of live sphagnum is performed by continuous water absorption from above. However, in the present invention, dried sphagnum is formed as an aggregated mass, whereby the bulk of the dried sphagnum is formed in a state where it can be maintained high relative to the water surface. Due to the sphagnum characteristic of having extremely excellent water-absorption capability, water is raised from below to above through this mass of dried sphagnum almost as if with a natural pump, thereby enabling supply of water to the live sphagnum arranged above. The surprising aspect of this is that the stem of live sphagnum and the dried sphagnum contacting it act just as a grafted tree, to thereby form a united body of the live sphagnum and the dried sphagnum. Transfer of water from the dried sphagnum to the live sphagnum can thus be performed very smoothly. In conventional techniques, live sphagnum can be managed by supplying water from above; however, inspection of checking the presence of water must be performed within a short period of time. This is cumbersome even with small-scale cultivation, and thus, large-scale cultivation of sphagnum with the aim of aggressive environmental recovery is extremely difficult.

In contrast, in the case of the present invention, a water basin is provided below and so long as water is secured therein, water can be supplied to the live sphagnum, thereby enabling continuous nurturing of the live sphagnum even without frequent inspections. Moreover, as the live sphagnum grows, the lower portion tissue (i.e., the stem) decays and with this decay, humic acid and fulvic acid, which are organic acids, seep through to the exterior, thereby forming an acidic environment that is resistant to microbial contamination. By virtue of this, management of the sphagnum cultivation becomes even simpler.

Further, the stems of live sphagnum in the present sphagnum cultivation base used in the present cultivation method and the present cultivation system are, as previously described, gathered into a bunch, preferably in a compressed bunch. In the present invention, an objective of making the stems of live sphagnum into a bunch, preferably into a compressed bunch, is to artificially reproduce a distinct colony called a "hillock," which is recognized in the natural world as accompanying the growth of sphagnum. Surprisingly, by forming the stems of live sphagnum into a bunch (i.e., aligned stems are densely collected), as in the present invention, growth of the sphagnum is remarkably facilitated, to a greater extent than in a case where live sphagnum is dispersed and cultivated (this will be discussed later).

For attaining accelerated growth of live sphagnum through this hillock formation, the live sphagnum is preferably propagated on a flat surface and/or a curved surface, which extends in a substantially continuous manner to the opening-defining surface, on the live sphagnum side, of the depression of the aggregated mass of dried sphagnum in the first embodiment, in which the depression of the present sphagnum cultivation base is provided; or of the depression of the support in the second embodiment.

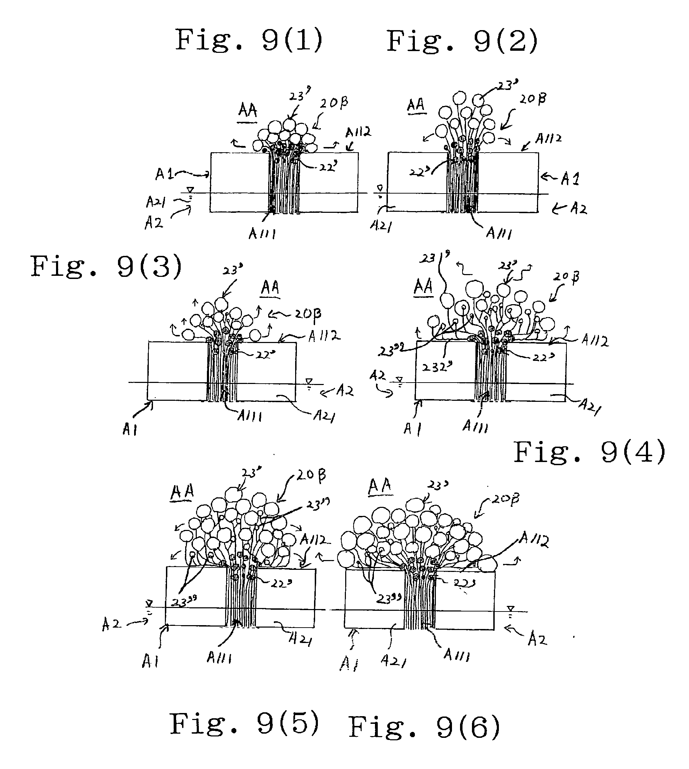

Figs. 9 (1) to (6) are diagrams showing the accelerated propagation process of live sphagnum plants that have formed a hillock in the vicinity of the above-described depression.

Fig. 9 (1) shows a state in which the present sphagnum cultivation base 20B of Fig. 4 (2) is fit into a through-hole All provided in a support A1, which is placed in a water basin A2 (a combination of the support A1, the present sphagnum cultivation base 20B, and the water basin A2 is referred to as "the present sphagnum cultivation system AA"). Water A21 is secured in the water basin A2, and dried sphagnum 22' is in contact with water A21, which acts as soaking water supplied to live sphagnum 23'. A flat surface A112 that substantially continues to an opening A111 is provided in the support A1.

Initially, the live sphagnum 23' extends in the upward direction [Fig. 9 (2)]; however, it soon collapses in the horizontal direction under its own weight and, as a whole, begins to extend radially in the horizontal direction on the flat surface A112 [Fig. 9 (3)]. In the course of live sphagnum 23' extending in a radial pattern, stems 232' (leaves 231') are exposed on the flat surface A112 so as to catch the sun's rays. Numerous regeneration buds 23" sprout from these stems 232' [Fig. 9 (4)]. Initially, these regeneration buds 23" also extend in the upward direction [Fig. 9 (5)]; however, these soon collapse in the horizontal direction under their own weight and spread radially [Fig. 9 (6)]. The regeneration buds 23" originating from the stems of live sphagnum sprout many buds again and initially extend in the upward direction.

In this manner, in the course of hillock formation, a cycle (i.e., extend in the upward direction → extend in a radial pattern → sprouting of regeneration buds → extension of regeneration buds in the upward direction → extension in radial pattern of regenerated live sphagnum → sprouting of again-regenerated buds → ...) is repeated, whereby propagation of live sphagnum can be accelerated. Without this hillock formation, repetition of this kind of cycle does not occur and propagation stops at an extremely limited level.

It should be noted that the aforementioned flat surface A112 can be a curved surface, or a combination of flat and curved surfaces. However, the inclination of this flat surface and/or curved surface preferably falls within the range of -90° to +10° with respect to the horizontal plane of the opening A111 (more preferably, the inclination angle of the flat surface is substantially 0°) . When the surface inclination is greater than +10°, the radial pattern extension of live sphagnum is inhibited, and there is a strong tendency for incident rays from the sun to be limited. When the surface inclination is less than -90°, live sphagnum droops. Further, a mechanism that can supply soaking water to the flat surface A112 (which may be a flat surface and/or a curved surface) may also be provided. This mechanism is typically a through-hole, connecting the upper and bottom surfaces of a component comprising this flat surface and/or curved surface, where a water-absorption material has been filled therein. Examples of this water-absorption material include dried sphagnum, live sphagnum, sponges, sand, water-absorbent resin, sea sponges, and the like; in consideration of factors such as water-lifting capability and cost, dried sphagnum is preferable. Further, no particular limitation is imposed on the distance from live sphagnum initially provided to the mechanism that can supply soaking water, but the preferable range of the distance is about 8 to 30 cm.

With reference to Figs. 9 (1) to (6), the present sphagnum cultivation base 20B employs live sphagnum whose stems have neither branches nor leaves, and live sphagnum whose stems have both leaves and branches. Nonetheless, in place of any of these types of live sphagnum, live sphagnum whose stems have cut branches and leaves may be used so that growth points are exposed. This results in successful formation of a hillock of live sphagnum, and a propagation cycle similar to that described above can be attained.

Furthermore, as a propagation site for live sphagnum corresponding to the flat surface A112, representative examples of flat surfaces and/or curved surfaces already shown in the drawings include: the sphagnum cultivation base 30B of Fig. 8 (1) comprising the upper surface portion of the sphagnum cultivation base 25 and the upper surface portion of the board 35B; the sphagnum cultivation base 30C of Fig. 8 (2) comprising the exterior surface portion of the support 35C; and the sphagnum cultivation base 30D of Fig. 8 (3) comprising the spherical surface of the ball-like support 3552. Further, the portion 251 of the sphagnum cultivation base 30A of Fig. 6 (4) and its outer extension; the portion 251' of Fig. 5 (2); and the portion 251 of the sphagnum cultivation base 25 of the Fig. 3 (5) can also be cited as examples of the above-described flat surfaces.

Moreover, in the present cultivation method and cultivation system, in addition to the propagation promotion effect provided by the above-described hillock formation, the scale of cultivation can be further accelerated by virtue of the high reproductive ability of live sphagnum itself. That is, when live sphagnum is finely cut, many of the cut pieces themselves have reproductive capability. For example, even when initially cultivating by use of one present sphagnum cultivation base, at the stage where the leaves and branches of the live sphagnum have grown to a certain degree (preferably the stage where the leaves and branches have attained a length of about 10 cm), the branches or leaves are clipped and the clipped plant body is cut to a length of about 1 to about 2 cm. By re-using these cut pieces of live sphagnum as the live sphagnum of the present sphagnum cultivation base, multiple units of new sphagnum cultivation bases can be produced from one sphagnum cultivation base. In this case, the cut live sphagnum piece is preferably placed in its original orientation; that is, such that one end corresponding to the leaf side of the live sphagnum prior to cutting is at the upper side and the other end corresponding to the stem side is at the lower side, and the cut live sphagnum is preferably used as the live sphagnum of the present sphagnum cultivation base. When the orientation of this piece of live sphagnum is opposite the above description or the orientation is disturbed to present a disordered state, the direction of growth of the live sphagnum in the new sphagnum cultivation base may become non-uniform. Further, by using the present cultivation method and the present cultivation system, the original present sphagnum cultivation base can continuously reproduce leaves and branches from the remaining stem. As for the above-described clipping, the vicinity of the leaves is preferably cut about twice each year, and the entire stem about once each year. Further, the stem itself of the live sphagnum can be finely cut to lengths of about 2 cm and the obtained finely cut pieces can be used as the live sphagnum of the present sphagnum cultivation base. (5) As described above, when live sphagnum is grown through use of the present sphagnum cultivation method and the present sphagnum cultivation system, the live sphagnum will densely propagate all over the initially provided flat surface and/or the curved surface serving as the site for propagation of live sphagnum, and at that point in time, the propagation of the live sphagnum slows down. However, there may be cases where provision of a wide space from the beginning with an aim to attain a massive propagation of live sphagnum is not necessarily appropriate. In such a case, it is often preferable to add sites for live sphagnum propagation at a later appropriate opportunity.

In other words, the present invention also provides a sphagnum cultivation system making use of a sphagnum cultivation base of the invention, in which a flat surface and/or a curved surface which extends substantially continuous with the opening of a depression of an aggregated mass of dried sphagnum or of a depression of a support, the opening being on the live sphagnum side, can be added at a later opportunity.

An "addition component" for providing a flat surface and/or curved surface to be extended later on is fixed in a contacting state to the outer extension portion of the component comprising the flat surface and/or curved surface substantially continuous with the opening of the depression of the aggregated mass of dried sphagnum (basically in the first embodiment of the present sphagnum cultivation base) or the depression of the support (basically in the second embodiment of the present sphagnum cultivation base), the opening being on the live sphagnum side. Through use of the addition component, the flat surface and/or curved surface can be extended further to provide a continuous flat surface and/or curved surface.

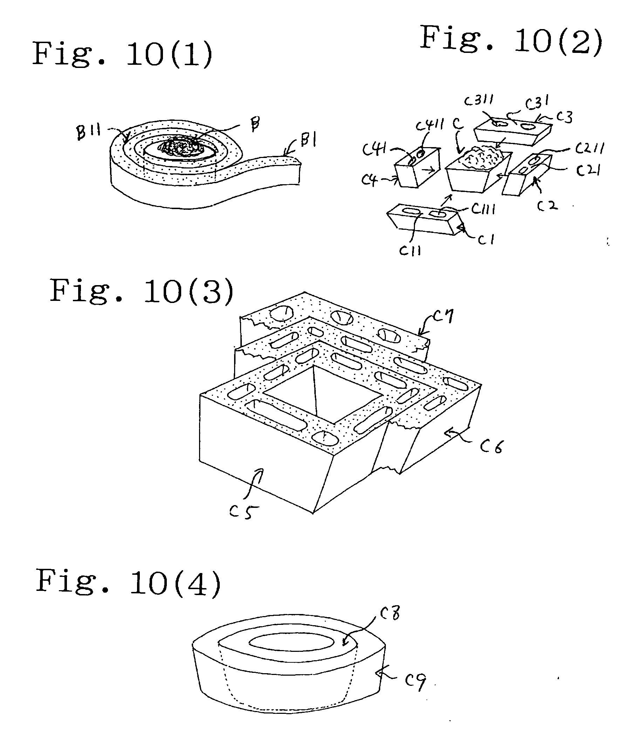

For example, as shown in Fig. 10 (1), a column-shaped portion of a column-shaped present sphagnum cultivation base B may have, as the above-described addition component, a flexible tape-shaped material having a width equal to the height of this column (e.g., felt tape) B1 wrapped around in a spiral pattern. With this formation, an added-on flat surface B11 is formed by one side surface (the upper surface) of the wound-around tape material B1.

Some exemplary manner of use of preferred addition components employed in the present sphagnum cultivation system in order to provide a continuous flat surface and/or curved surface extending from the initially provided flat surface and/or curved surface are: screw fixation to the outer extension portion with a screw; engagement with an interlocking structure provided at the outer extension portion (e.g., a lug provided in a protruded state in the outer direction from the bottom portion of the outer extension portion); abutment attained by placing in a state in contact with the outer extension portion; insertion attained by fitting into concave-convex structures provided on the outer extension portion; or bonding through adhesion by use of an adhesive (no particular limitation is imposed on this bonding means). These components are thus fixed, in contact, to the outer extension portion of a structural member comprising a flat surface and/or curved surface substantially continuous with the opening, on the live sphagnum side, of the depression of the aggregated mass of dried sphagnum (basically in the first embodiment of the present sphagnum cultivation base) or the depression of the support (basically in the second embodiment of the present sphagnum cultivation base). For example, as shown in Fig. 10 (2), rectangular column-shaped components C1 to C4 can each abut the four side surfaces of a rectangular column-shaped tapered sphagnum cultivation base C, and their height is equal to that of the present sphagnum cultivation base C. When the cultivation base C abuts the rectangular column-shaped components C1 to C4, the additional flat surface is formed by side surfaces (upper surfaces) C11 to C41 of the components C1 to C4. In the components C1 to C4, through-holes (C111 to C411) that connect the upper surfaces C11 to C41 and the bottom surfaces are provided, and water-absorbent material is filled in those through-holes. Examples of the water-absorbent material, as described above, include dried sphagnum, live sphagnum, sponges, sand, water-absorbent resin, and sea sponges; in consideration of superior water-lifting capability and cost, dried sphagnum is preferable. Fig. 10 (3) is a drawing showing the flat surface addition of (2) in a multiple formation pattern (the sphagnum cultivation base C and the water-absorbent material are omitted from the drawing) . As shown in Fig. 10 (3), the outer side of an addition component C5 abuts an addition component C6, and the outer side of the addition component C6 abuts an addition component C7, whereby additional flat surfaces can be increased in number in correspondence with the growth of the live sphagnum. Further, as seen in Fig. 10 (4), as with the present sphagnum cultivation base B of Fig. 10 (1), when the shape is column-shaped, annular addition components C8 and C9 can be consecutively abutted against this outer extension, thereby increasing additional flat surfaces.

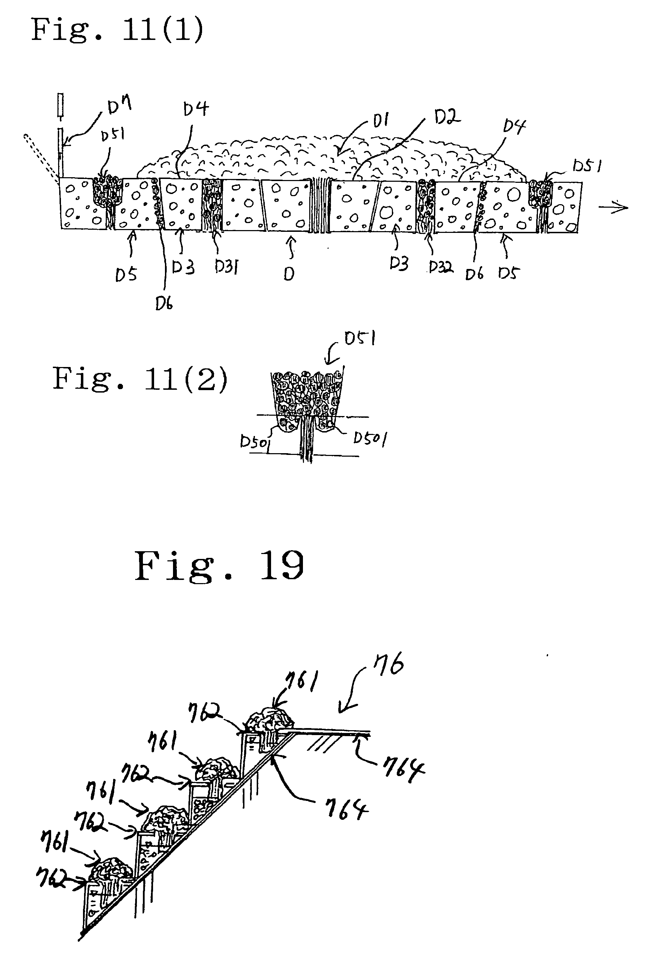

Figs. 11 (1) and (2) are a drawing showing a portion of a vertical cross-section of the present sphagnum cultivation system provided with additional flat surfaces created by addition components as shown in Figs. 10 (2) to (4) . A typical process for achieving the state shown in Fig. 11 (1) involves nurturing live sphagnum D1 in a sphagnum cultivation base D (the dried sphagnum molded product is not shown in the drawings) with soaking water from a water basin (not shown) present at a lower position, and providing the live sphagnum D1 in the sphagnum cultivation base D. On a flat surface D2 which serves as the site for propagation of live sphagnum D1, at the stage where the live sphagnum D1 has sufficiently grown in the course of the propagation cycle accompanying the above-described hillock formation, an addition component D3 is abutted against the outer extension of the present sphagnum cultivation base D, whereby live sphagnum D1 is propagated on the flat surface D4 continuous with the flat surface D2. The addition component D3 has through-holes D31, D32 filled with dried sphagnum as a water-absorbent material. The dried sphagnum in these through-holes raises the water of a water basin upward, and through contact with live sphagnum D1 which is about to propagate, water is supplied to this live sphagnum D1 and propagation is promoted. Further, in accordance with the degree of propagation of live sphagnum D1, another addition component D5 may be abutted against the outer extension portion of the addition component D3 to further expand the added flat surfaces. Further, these added flat surfaces can be expanded sequentially towards outer directions. In this example, the abutting portions of the addition components D3 and D5 are filled with dried sphagnum D6. Like the dried sphagnum filled in the through-holes D31, D32, the dried sphagnum D6 can supply soaking water to live sphagnum D1. Further, through-holes D51, D52 are provided in the addition component D5 and filled with dried sphagnum for supplying soaking water to the live sphagnum D1. The cross-sectional area of the region surrounding the live sphagnum may be, like through holes D51, D52, made to be wider than the cross-sectional area of the region in the vicinity of the water basin, so that the dried sphagnum can be resistant to falling out of the through-holes. Preferably, a small stepdown portion D501 is provided at the bottom of the wide opening side of the cross-sectional-area-changing portion of the through-holes D51, D52 [Fig. 11 (2)], and such a stepdown portion is preferably formed so that soaking water tends to gather therein. Also, in the case where the growth of live sphagnum D1 is desired to slow down, a barrier wall D7 is preferably provided along the outer extension of the addition component D5. By this provision, extension of the live sphagnum towards the outer side can be limited, and as a result, the above-described propagation cycle can be stopped.
(6) In this manner, by using the present cultivation method and the present cultivation system, cultivation of sphagnum can be performed easily and efficiently. The present invention enables formation of what amounts to a high moor at which sphagnum thrives, under a variety of environments even in metropolitan regions and man-made objects. Furthermore, the invention enables recovery of the continuously dwindling sphagnum bogs in the natural world. That is, under the current circumstances, the implications of efficiently cultivating expensive sphagnum with garden applications and the like are strikingly remarkable, along with the capability to easily form sphagnum bogs that have 4 to 5 times the capacity of regular plants to fix carbon dioxide, let alone the beautiful appearance of live sphagnum. Thus, the present invention is quite useful as it drastically alleviates the primary cause of global warming.
(7) The cultivation method and cultivation system of the present invention may be implemented, for example, in any of the following embodiments.

### 1) Embodiment in which the present sphagnum cultivation base is installed in a water basin

As described above, the present sphagnum cultivation base has a portion at which the live sphagnum is exposed, and another or the other portion of the base is brought into contact with water of a water basin. In this embodiment, one or more sphagnum cultivation bases of the present invention are employed, and each base is brought into contact with water of a water basin through "installation" of the base in the water basin.

As used herein, "installation" literally refers to locating a sphagnum cultivation base of the present invention (such as the sphagnum cultivation base 20A, 20B, 25, 30A, 30B, 30C, or 30D) at a site for implementing the present cultivation method or the present cultivation system, and encompasses, for example, forming a hole in the ground or a concrete surface and then placing a sphagnum cultivation base of the present invention in the hole.

In this embodiment, for example, the water level of the water basin is preferably controlled such that live sphagnum of the present sphagnum cultivation base is prevented from being constantly submerged. Typically, the water level may be controlled such that water level is maintained under the height of the sphagnum cultivation base.

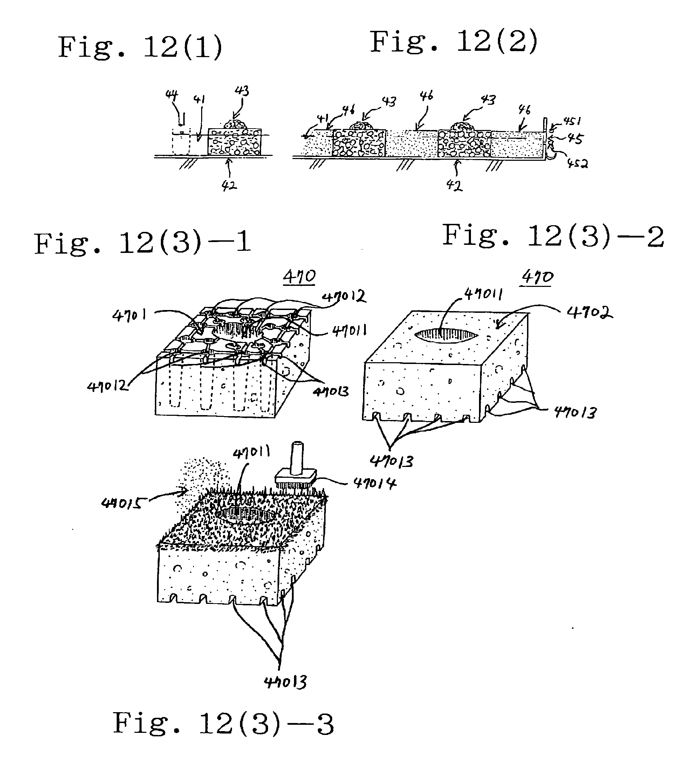

The simplest method to maintain the water level under the base in this embodiment for implementing the present cultivation method or the present cultivation system is, for example, that shown in Fig. 12 (1) (sectional elevation). Specifically, there is prepared a container capable of holding water (e.g., a dish or a water tank), and a sphagnum cultivation base 43 is installed on the bottom 42 of the container. Water 41 is poured into the container to a predetermined level under the top of the base, and the level of water is controlled to the predetermined level or thereabouts. The water level control may be performed by measuring the water level by eye, and adding water via a water supply port 44. However, preferably, the water level control is performed by automatically detecting a drop in water level through use of a water level sensor or similar means employing a water level indicator, and automatically adding water when the water level is lowered. In addition, excessive water attributed to rain or a similar cause is preferably drained through a drain port, which is additionally provided, to thereby lower the water level to the predetermined level.

Alternatively and preferably, the water level may be controlled in a manner shown in Fig. 12 (2) (sectional elevation) . Specifically, a plurality of sphagnum cultivation bases 43 are placed on the bottom of a container, and the space between the bases 43 under a level near the height of the bases is filled with gravel or other water-permeable inorganic fine matter 46 (the top surface of the portion filled with the fine matter serves as a flat surface on which live sphagnum grows). In the inorganic fine matter 46, means as shown in Fig. 12 (1), preferably means for maintaining water level (in Fig. 12 (2), water-level control valves 451, 452 provided at a side wall 45) is provided in the inorganic fine matter 46, to thereby create conditions imitating an artificial moor containing an aquifer. The above inorganic fine matter portion is a substantial portion to be covered by sphagnum which is grown from the live sphagnum in the bases through the present cultivation method or the present cultivation system. This embodiment shown in Fig. 12 (2) employing inorganic fine matter is one of the most preferred embodiments of the present cultivation method or the present cultivation system, since the system resembles a natural sphagnum moor.

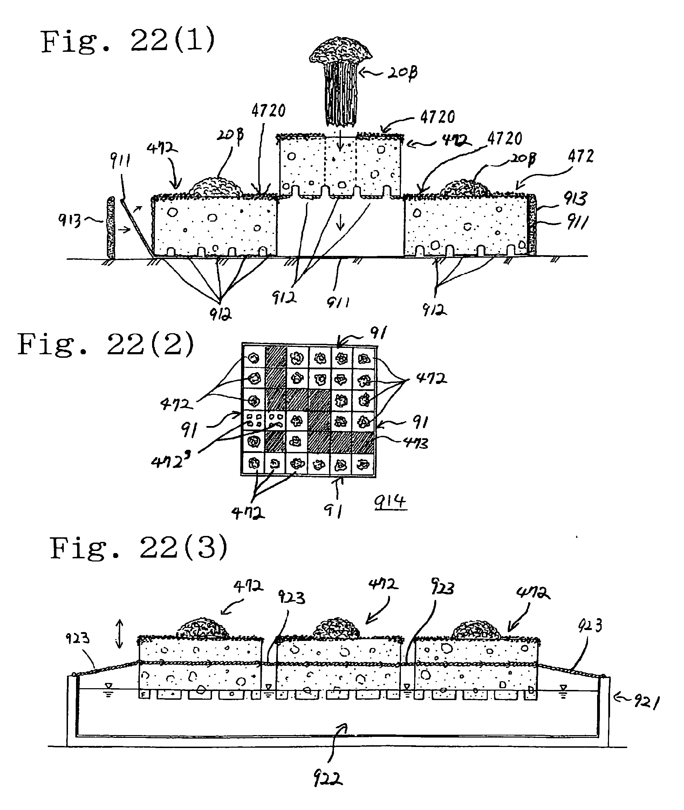

Fig. 12 (3) shows a process for producing a support 47 having a natural texture. Specifically, the surface of a support body 470 made of, preferably, a lightweight material such as expanded polystyrene is treated with a "liquid substance which is hardened afterwards and is viscous before hardening" (in this figure, referred to as a "liquid coating material"). Fig. 12 (3)-1 shows a bottom surface 4701 of the support body 470, which is inverted, and Fig. 12 (3)-2 shows a top surface 4702 (the top surface serves as a flat surface on which live sphagnum grows). In Fig. 12 (3)-1, the bottom surface 4701 is provided, at a center thereof, with a through-hole 47011 extending through the body to the top surface 4702. The bottom surface 4701 is also provided, around the through-hole 47011, with a plurality of holes 47012 which do not extend through the body (hereinafter referred to as depressions), and with trenches 47013 connecting the through-hole 47011 to the depressions 47012 and extending to the side surfaces of the support body 470. In Fig. 12 (3)-2, in which the support body 470 of Fig. 12 (3)-1 is inverted, the trenches 47013 are open in the side surfaces of the support body 470. The surface 4702 of the support body 470 is applied with a liquid coating material and then tapped with a metal wire brush 47014 for napping of the surface. Soil matter 47015 such as soil is scattered onto the nappy surface [Fig. 12 (3)-3], and the soil matter surface is leveled, followed by application of a waterproof material to the leveled surface, to thereby produce a support 47 having a texture similar to natural soil. Although the support 47 has a single through-hole 47011, the support may have a plurality of through-holes. Alternatively, the support body 470 of the support 47 may be formed, for example, by laminating a plurality of thin plates having a plurality of through-holes, or by molding a number of particles into a predetermined shape (so long as the thus-formed support body has a through-hole serving as the above through hole 47011). For example, when the stem portion of the present sphagnum cultivation base 20B (Fig. 4) is inserted into the through-hole 47011 of the support 47, preferably in a compressed manner, a sphagnum cultivation base 472 of the present invention (shown in Figs. 22 (1) to (3)) in which a support and live sphagnum are integrally assembled is provided. Preferably, the bottom-side opening of the through-hole 4701 is covered by a water-permeable sheet such as a plastic net to prevent falling of the live sphagnum from the bottom of the present sphagnum cultivation base 20B. The manner of employing the sphagnum cultivation base 472 according to this embodiment will be described later (Figs. 22 (1) to (3)).

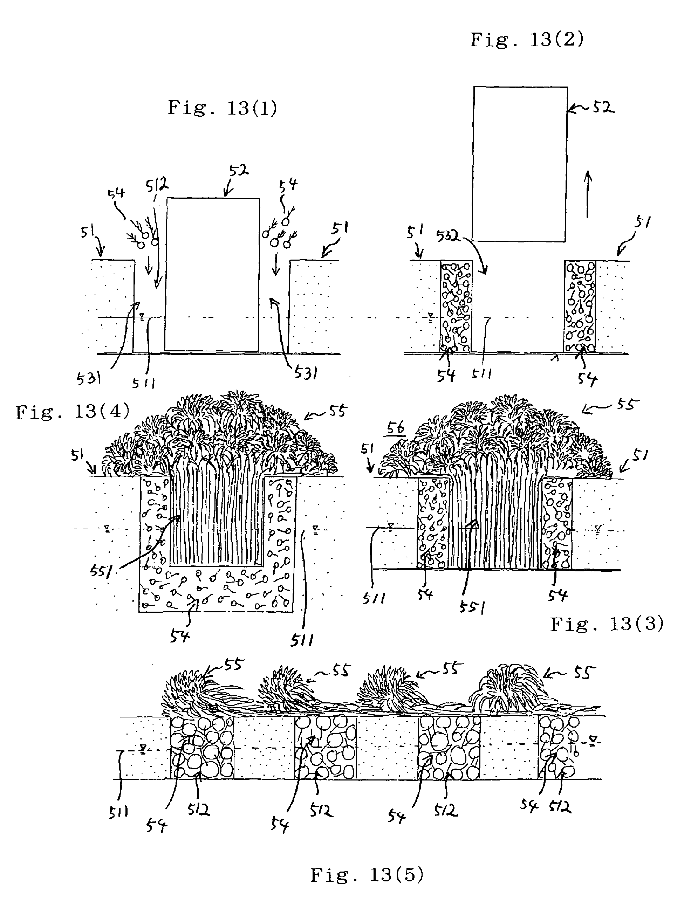

As described above, Fig. 12 (2) shows a process in which the present sphagnum cultivation base 43 is firstly prepared, and gravel or other inorganic fine matter 46 is added to surround the bases. Alternatively, the present sphagnum cultivation base may be produced by, for example, forming a hole in the ground or a concrete surface, and constructing a sphagnum cultivation base in the hole. For example, as shown in Fig. 13 (1) (cross section taken perpendicularly), a hole 512 is formed in ground 51 (serving as a flat surface on which live sphagnum grows) in which ground water level is maintained at a level indicated by 511, and a column 52 is placed in the hole. The space 531 between the column 52 and the inner wall of the hole 512 is filled with dried sphagnum 54, preferably a mixture of dried sphagnum and water (the mixture may be a mixture of dried sphagnum and a hardenable component such as a composition containing water and paper fiber), and the column 52 is removed [Fig. 13 (2)]. A stem bunch 551 of live sphagnum 55 is fitted in the thus-formed space 532, to thereby produce a sphagnum cultivation base 56 of the present invention in this embodiment [Fig. 13 (3)]. Preferably, in order to increase water fed to live sphagnum 55, dried sphagnum 54 may be placed at the bottom of the hole 512, in addition to along the inner wall of the hole 512 [Fig. 13 (4)]. Alternatively, live sphagnum 55 may be grown through use of a plurality of holes 512 by filling the entire space of the holes with dried sphagnum 54, and placing a plurality of live sphagnum plants 55 on the dried sphagnum such that the side of the stem bunches are brought into contact with the dried sphagnum 54 and, preferably, such that the live sphagnum plants 55 are overlapped with one another [Fig. 13 (5)]. In the embodiment shown in Fig. 13 (5), live sphagnum and masses of dried sphagnum are brought into contact with each other at the exterior of the dried sphagnum.

This embodiment employing "installation" can be used in various applications such as a) uses on rooftops, b) uses in fallow paddy fields, c) indoor uses, and d) uses for restoring a field which was once a moor.

### a) Uses on rooftops

When the present cultivation method or the present cultivation system is used to form a water layer on a building rooftops or a similar site, a sphagnum bog can be produced on the rooftop. Cultivation of sphagnum on a rooftop or a similar site enables not only harvesting of sphagnum and fixation of carbon dioxide, but also greatly prevents an increase in temperature of the rooftop in summer. In addition, a plant unique to high moors such as *Drosera rotundifolia, Vaccinium oxycoccux, Geum pentapetalum,* or *Primula nipponica* can be grown together with sphagnum. Moreover, generation of mosquito larvae in a water basin can be substantially prevented due to acidic substances such as fulvic acid and humic acid derived from live sphagnum.

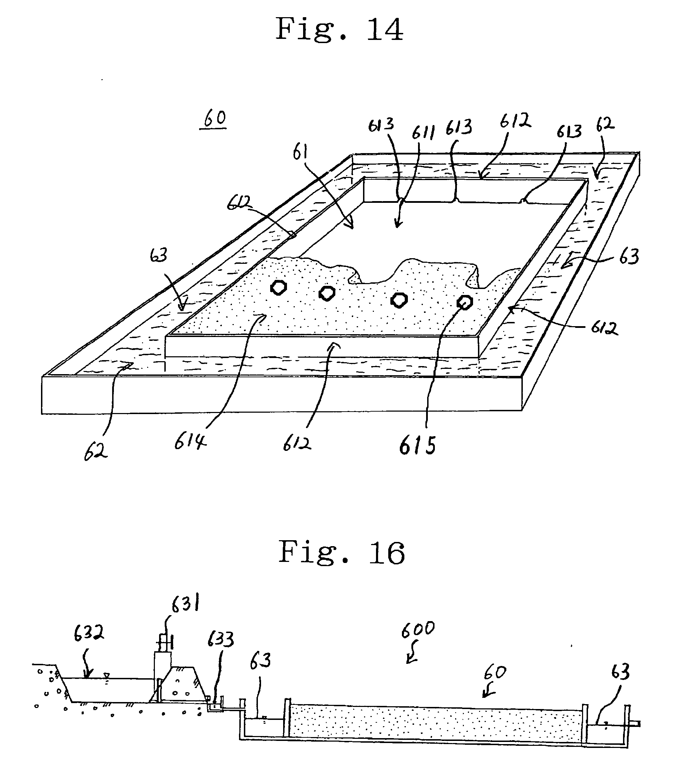

Typically, the "installation" on a rooftop or a similar site can be embodied through use of, for example, an artificial cultivation field for sphagnum, as shown in Fig. 14.

Referring to Fig. 14, the artificial cultivation field 60 has a water-retaining area 61 and a water basin 63. The water-retaining area 61 has an open top, a waterproof bottom 611, and sidewalls 612 having water passage ports 613 which allow water to pass therethrough. The water-retaining area 61 is filled with gravel 614 serving as a water-retaining material. The water basin 63 retains water 62 such that the water 62 is in contact with all or a part of the sidewalls of the water-retaining area 61 and that the water 62 moves through the water passage ports 613 provided in the walls to the water-retaining area 61. Water level in the water-retaining area 61 and the water basin 63 is controlled by means of a water level sensor or similar means such that the gravel 614 always retains water 62 entering through the ports 613 and such that the water level does not exceed the top of the gravel 614. In addition, the artificial cultivation field 60 is preferably provided with level adjusting means which maintains the field 60 horizontally (for example, legs whose lengths are independently adjustable are provided at the bottom on the corners of the water basin 63). In the artificial cultivation field 60, the top surface of the gravel 614 serves as a flat surface on which the live sphagnum grows. No particular limitation is imposed on the material forming the water basin 63, and examples include concrete, plastic, lumber, and stone (e.g., artificial marble) . In particular, plastic reinforced with glass fiber such as FRP or GMT is preferred, since such a reinforced plastic is light, is difficult to break, and is easy to mold.

The present cultivation method or the present cultivation system can be implemented by fitting or placing a sphagnum cultivation base of the present invention in a hole 615 formed in the gravel 614 of the artificial cultivation field 60 such that the live sphagnum is exposed, as shown in Figs. 13 (1) to (5).

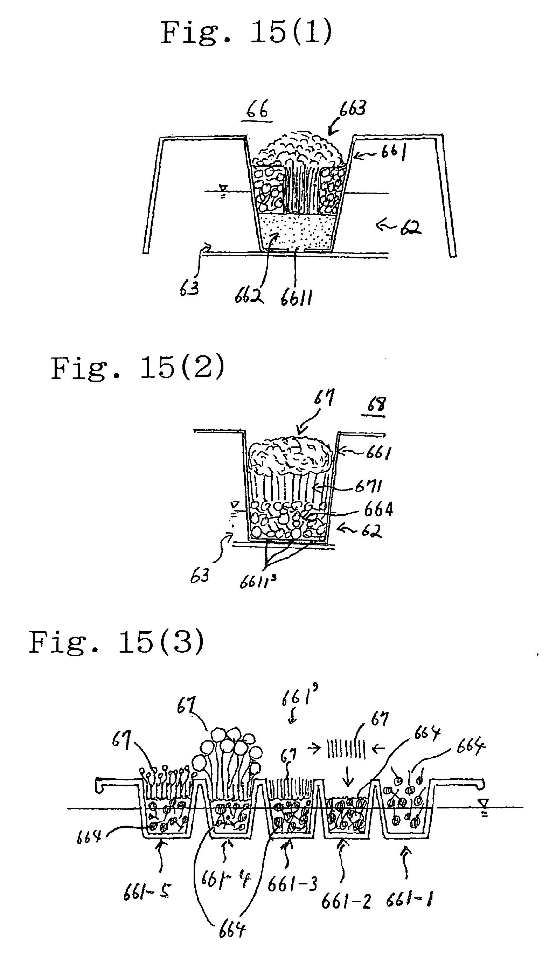

Alternatively, the present cultivation method or the present cultivation system may be implemented through use of an artificial cultivation field 60 shown in Fig. 14 containing no water-retaining area 61. Specifically, water 62 is retained in the water basin 63, and any of various sphagnum cultivation bases of the present invention (e.g., 20A, 20B, 25, 30A, 30B, 30C, 30D) is placed in the water basin 63 in which the level of water 62 is controlled. In this case, preferably, for example, a ditch-shaped structure 661 is placed in the water basin, the ditch-shaped structure 661 having a bottom having through-holes 6611 and flat surfaces 6610 extending from the opening of the ditch-shaped structure 661, on which flat surfaces 6610 the live sphagnum grows. Inorganic fine matter 662 serving as a water-permeable material such as gravel is placed on the bottom plate, and a sphagnum cultivation base 663 according to the first embodiment of the present invention is placed on the fine matter. Thus, there can be produced a sphagnum cultivation base 66 of the present invention employing the ditch-shaped structure 661 as a support [Fig. 15 (1): sectional elevation; in this case, the inorganic fine matter 662 is not necessarily employed]. Alternatively, a sphagnum cultivation base of the present invention may be produced in a manner shown in Fig. 15 (2). Specifically, a plurality of through-holes 6611' are formed at the bottom of the above ditch-shaped structure 661, and dried sphagnum 664 is placed at the bottom of the ditch. On the dried sphagnum, a stem bunch of live sphagnum 67 is placed such that the stem portion 671 is fit in the ditch, to thereby produce a sphagnum cultivation base 68 of the present invention. Alternatively, as shown in Fig. 15 (3) (sectional elevation), a plurality of the ditch-shaped structures 661 may be employed to form a multi-ditch-shaped structure 661'. The multi-ditch-shaped structure 661' preferably has flat surfaces provided between adjacent openings of the ditches 661, on which flat surfaces live sphagnum grows, rather than openings of the ditches 661 being continuously aligned. In each ditch-shaped structure 661, the inorganic fine matter 662 and the present sphagnum cultivation base 663 according to the first embodiment as shown in Fig. 15 (1) or (2) are placed (in a manner similar to that shown in Fig. 15 (1)) (not shown in Fig. 15 (3)), or dried sphagnum 664 and live sphagnum 67 including a stem 671 are placed (in a manner similar to that shown in Fig. 15 (2)), to thereby produce a multi-type sphagnum cultivation base 69 of the present invention, containing a plurality of live sphagnum cultivation start points. Fig. 15 (3) schematically shows steps in relation to the multi-type sphagnum cultivation base 69 of the present invention. In a ditch 661-1, dried sphagnum 664 is placed in the ditch. In ditches 661-2 and 661-3, a stem bunch of live sphagnum 671 is placed on the dried sphagnum 664 such that the growth point is located on the upper side. In ditches 661-4 and 661-5, live sphagnum 67 is grown and propagated.

### b) Uses in fallow rice field

This embodiment enables a fallow rice field to be transformed to a sphagnum bog for promotion of the agricultural sector. Water required to the sphagnum bog can be obtained from a water channel which has originally been provided for the paddy field.

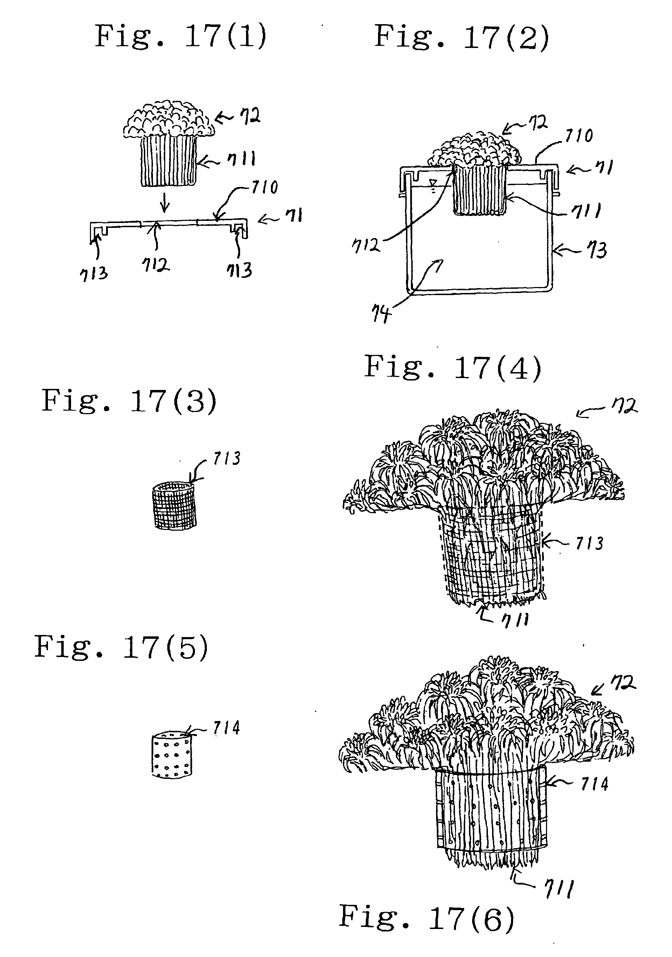

Specifically, in this embodiment, for example, an artificial cultivation field 60 similar to that shown in Fig. 14 is formed in the fallow rice field 600, and water is supplied to the water basin 63 from a water reservoir 632 through a water gate 631 equipped thereto and through a water channel 633 (Fig. 16: sectional elevation).

### c) Indoor uses

The present cultivation method or the present cultivation system can be implemented indoors, so long as the amount of light such as sunlight is sufficient for the sphagnum to perform photosynthesis necessary for its life. For indoor uses, a present sphagnum cultivation base may often require to have attractive features as an interior item. For example, the present cultivation method or the present cultivation system may be implemented on a relatively small scale through use of a sphagnum cultivation base of the present invention having a support designed as desired, such as the present sphagnum cultivation base 30C. In relation to this embodiment, a sphagnum bog similar to that achieved on a rooftop as described above may also be established indoors, so long as light conditions as described above are available.

### d) Uses for the purpose of recovery of a former moor

Recently, many high moors have been said to be transformed to intermediate or low moors, which are more difficult to last than high moors. In addition, moors themselves have been reported to rapidly dry up and on the way of disappearing. The present cultivation method or the present cultivation system can be employed to recover such a once-thrived moor.

Specifically, for example, a dried once-thrived moor is treated through a process as shown in Figs. 13 (1) to (4), whereby water is delivered from the aquifer which has been lowered in the deep underground to live sphagnum located above the ground through pump-up action of the dried sphagnum, to thereby grow sphagnum for recovering the former moor to a high moor. When the level of the aquifer under the ground is too deep for the dried sphagnum to pump up water, a water source such as a water reservoir 632 shown in Fig. 16 may be needed to supply water to the sphagnum.

### 2) Embodiment in which the present sphagnum cultivation base is installed above the bottom of the water basin

As described above, the present sphagnum cultivation base has a portion at which the live sphagnum is exposed, and another or the other portion of the base is brought into contact with water of a water basin. In this embodiment, one or more sphagnum cultivation bases of the present invention are employed, and each base is brought into contact with water of a water basin through use of a mechanism with which the base can be placed above the bottom of the water basin.

This embodiment is suitable in the case where the water basin is isolated from the outside at some degree. The mechanism with which the base can be placed above the bottom of the water basin (hereinafter may be referred to as a hanging device) separates the sphagnum cultivation base from the bottom of the water basin by, for example, a force of raising the base.

In Figs. 17 (1)-(6) (sectional elevation), a hanging device 71 is a lid of a water basin 73. The hanging device 71 has an opening 712 for allowing a stem bunch 711 of live sphagnum of the present sphagnum cultivation base 72 to be fitted in and an attachment portion 713 which is fitted in the periphery of the opening of the cylindrical water basin 73 to attach the hanging device 71 to the water basin 73 [Fig. 17 (1)]. The hanging device 71 has a flat surface 710 serving as a flat surface on which live sphagnum 72 grows. As shown in Fig. 17 (2), a stem bunch 711 of live sphagnum of the present sphagnum cultivation base 72 is fitted in the opening 712 of the hanging device 71, and the hanging device 71 is attached to the opening of the water basin 73 containing water 74, whereby the stem portion 711 is brought into contact with the water 74 in the water basin 73, while the present sphagnum cultivation base 72 is hung. Thus, the live sphagnum can be grown through use of the present sphagnum cultivation base 72. Alternatively, the stem portion 711 may be fitted in, for example, a cylindrical metal mesh mold member 713 as shown in Fig. 17 (3) for molding the stem portion as shown in Fig. 17 (4), or into a hollow cylindrical member 714 having holes as shown in Fig. 17 (5) for molding the stem portion as shown in Fig. 17 (6).

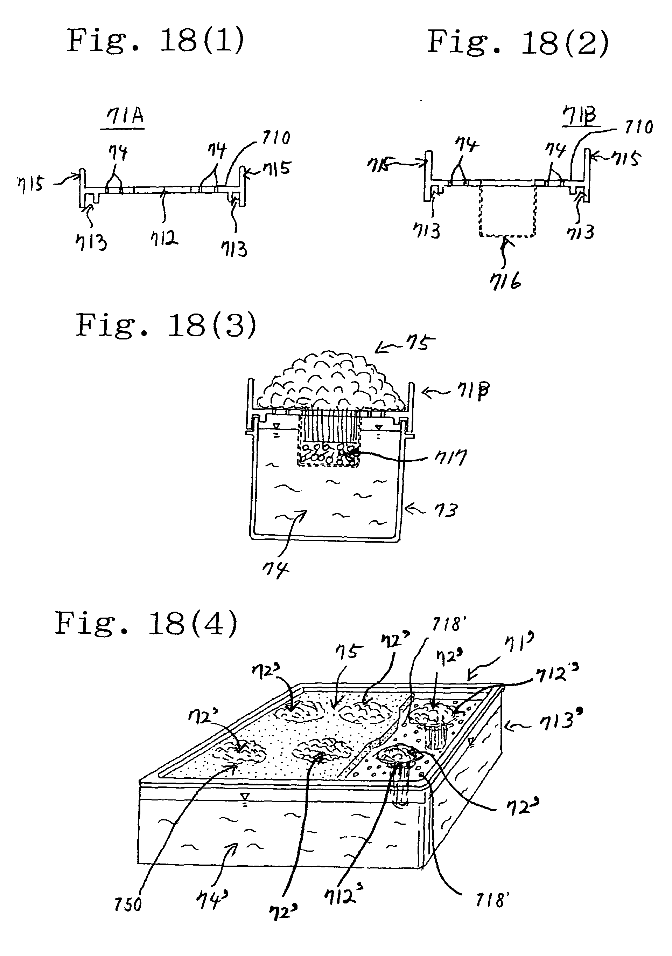

In addition, the hanging device may have, for example, small holes 714 for removal of water and for gas exchange, or may be provided with projections 715 [hanging device 71A shown in Fig. 18 (1) : sectional elevation]. Alternatively, a bag-like member 716 made of a material that allows water to pass therethrough, such as a mesh material, may be attached to the opening 712 [hanging device 71B shown in Fig. 18 (2): sectional elevation]. Live sphagnum 75 can be grown through use of the bag-like member 716 in a manner as shown in Figs. 17 (1) to (6) by imparting shape to dried sphagnum 717 at the bottom of the bag-like member 716, and inserting a stem bunch of live sphagnum 75 into the opening 712 on the molded dried sphagnum [Fig. 18 (3): sectional elevation]. Alternatively, a plurality of openings 712 may be formed in a single hanging device. In Fig. 18 (4), a lid-shaped hanging device 71' has a plurality of opening 712' and small holes 718'. The lid-shaped hanging device 71' is adapted to be fitted, in a fixed manner, in the periphery of the opening of a rectangular water tank 713' containing water 74'. A present sphagnum cultivation base 72' is fitted in each of the openings 712' in a manner described above, and the space between the present sphagnum cultivation bases 72' is filled with gravel 75. The flat surface 750 formed by the gravel 75 serves as a flat surface on which live sphagnum 72' grows. As described above, also in the present embodiment, a plurality of sphagnum cultivation bases can be cultivated.

In the present cultivation method or the present cultivation system in this embodiment employing "hanging" as described above, the hanging device serves as a lid sealing the water basin and thus can prevent evaporation of water from the water basin. The present embodiment is suitable for a) rooftop uses or b) indoor uses described above, or in c) uses on a slope or wall surface. In either uses a) or b) (i.e., rooftop uses or indoor uses), sphagnum moss can be nurtured by implementing the sphagnum cultivation method or sphagnum cultivation system described above on a rooftop or indoors under appropriate conditions.

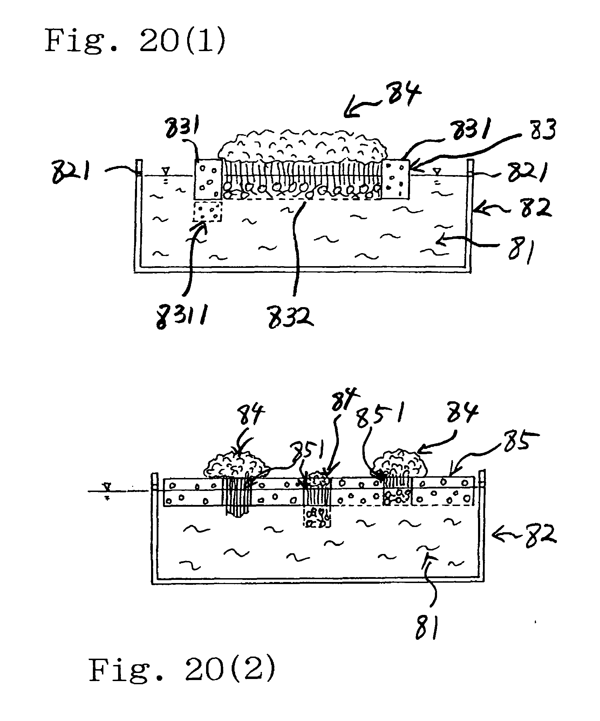

An example of use c) which is realized on a slope or wall surface is shown in Fig. 19 (sectional elevation), and specifically, hanging members 762 are installed on a slope 76 to form steps, and sphagnum cultivation bases 761 are hung by the hanging members over water basins 763. Water is supplied to each water basin 763 through a water supply tube 764 at any desired points in time. Excessive water is drained through small holes (not shown) formed in the hanging member 762.

### 3) Embodiment in which the present sphagnum cultivation base is floated by buoyant force of the base in the vicinity of water surface of a water basin

As described above, the present sphagnum cultivation base has a portion at which the live sphagnum is exposed, and another or the other portion of the base is brought into contact with water of a water basin. In this embodiment, one or more sphagnum cultivation bases of the present invention are employed, and each base is brought into contact with water through use of a mechanism enabling the base to float, by buoyant force of the base, in the vicinity of water surface of the water basin.

The mechanism enabling the base to float, by buoyant force of the base, in the vicinity of water surface of the water basin is preferably implemented through use of a material or a device having a specific gravity lower than that of water. Examples of the material include expanded polystyrene and lumber. Examples of the device include a floating ball, a floating ring, and other devices containing a large amount of air or a similar gas.

For example, in Fig. 20 (1) (sectional elevation), water 81 is contained in a water tank 82 equipped with drain holes 821, and a container 83 having a low specific gravity is placed on the water, the container having an outer frame 831 formed of expanded polystyrene and a bottom 832 of a mesh material, and a number of the present sphagnum cultivation bases 84 being placed in the container. The low-specific gravity container 83 floats on water 81 by buoyant force of the container against water. Therefore, water 81 covers no leaves or branches of the present sphagnum cultivation base 84, but covers stems. By maintaining the state, the live sphagnum of the sphagnum cultivation base 84 can be grown. The upper surface of the outer frame 831 serves as a flat surface on which live sphagnum grows in the present sphagnum cultivation base 84. Preferably, the low-specific-gravity container 83 is adapted to receive additional expanded polystyrene parts (8311) which are required when the buoyant force is insufficient. Alternatively, the expanded polystyrene member may be replaced by or employed together with floating balls, etc. Also, as shown in Fig. 20 (2), the live sphagnum of the present sphagnum cultivation base may be grown by forming a plurality of through-holes 851 in an expanded polystyrene board 85, fitting the present sphagnum cultivation base 84 in the holes 851, and bringing the stems of the sphagnum into contact with water 81. In this embodiment, the upper surface of the expanded polystyrene board 85 serves as a flat surface on which the live sphagnum in the present sphagnum cultivation base 84.

The present cultivation method or the present cultivation system in the "floating" embodiment is suitable in a) rooftop uses or b) indoor uses described above, or c) uses on the surface of dam lakes (artificial lakes) or water reservoirs. In either uses a) or b) (i.e., rooftop uses or indoor uses), sphagnum moss can be nurtured by implementing the sphagnum cultivation method or sphagnum cultivation system described above on a rooftop or indoors under appropriate conditions. Particularly when the embodiment is carried out on a relatively small scale, the sphagnum cultivation base according to the present embodiment is useful as an interior item, since the water tank and the expanded polystyrene part described above can be formed to have artistic appearances.

Use c) for surfaces of dam lakes (artificial lakes) or water reservoirs is one of the most promising applications. Specifically, when the present embodiment is carried out on the surface of a dam lake (artificial lake) or a water reservoir to cover the surface of the lake with sphagnum cultivation fields, evaporation of water can be reduced, and sphagnum can be cultivated without feed of water. In addition, cultivation of sphagnum is considered to slightly acidify the lake water and therefore to prevent generation of harmful planktons which may otherwise be caused by eutrophication or a similar cause.

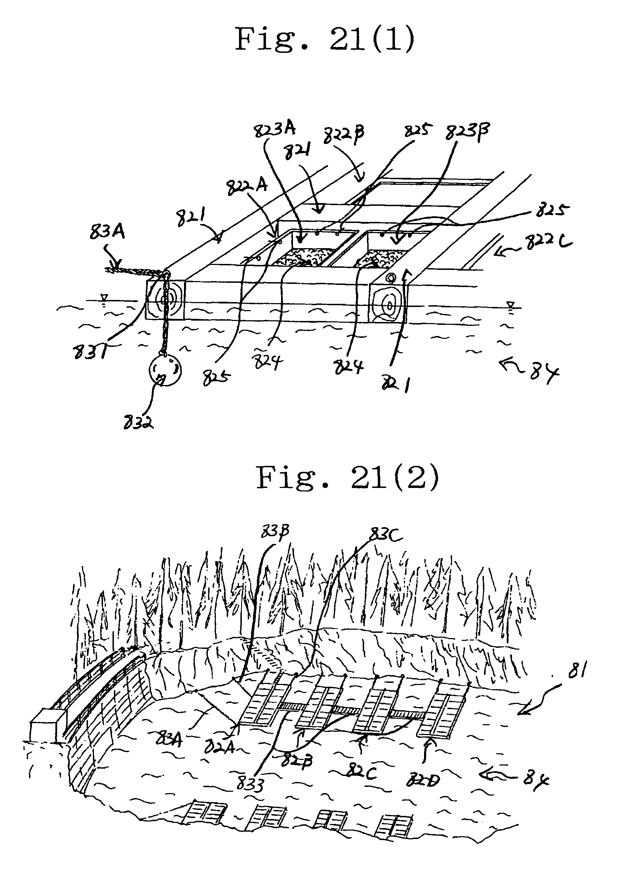

Figs. 21 (1) and (2) schematically show the "floating" embodiment performed on a large scale. Fig. 21 (1) is a schematic enlarged view of a float unit 82 in a dam lake or a similar site 81, and Fig. 21 (2) is a general schematic view thereof. Each of raft-like floating units 82A, B, C, D... is partitioned by wooden frames 821 and reinforced. The bottom portion of each block 822A, B, C... has a mesh member which is attached thereto with a strong tension (not shown). Small frame units 823A, B... are placed on the bottom of each block, and each frame unit is fixed to the block by means of pins 825. Each frame unit has a bottom covered with a mesh member and a frame made of a lightweight material such as wood or expanded polystyrene. In each frame unit 823A, B, C..., the present sphagnum cultivation bases 824 are placed such that the growth points are oriented upward. Each of the floating units 82A, B, C... is connected to the lake front by means of wire ropes 83A, B, C.... To one end of each wire rope which passes through the connection point 831 of the floating unit, a floating ball 832 is attached for increasing buoyant force of the floating unit 82. Each adjacent two of the floating units 82 are connected to each other by means of a raft passage 833 allowing workers or other persons to easily move between the floating units. Thus, a plurality of raft floating units 82 are maintained to float on the lake water 84.

By maintaining the state shown in Figs. 21 (1) and (2), sphagnum can be grown through use of the present sphagnum cultivation bases 824 on the lake surface of the dam lake 81, enabling not only cultivation of sphagnum, but also prevention of evaporation of water from the lake and improvement of environment with respect to the lake water.

Fig. 22 shows an application of the present sphagnum cultivation bases 472 described in relation to Figs. 12 (3)-1 to (3)-3. The present sphagnum cultivation bases 472 may be used by installing the bases on a place or by floating the bases on water.

In an embodiment in which the base is installed on a site, for example as shown in Fig. 22 (1) (sectional elevation), a plurality of the present sphagnum cultivation bases 472 (the flat surface 4720 serves as a flat surface on which live sphagnum of a sphagnum cultivation unit 20B grows) are unified to one another, and the bottom and the sides of the unified sphagnum cultivation bases 472 are covered with a waterproofed sheet 911 (in particular, the bottom is preferably fixed through use of an adhesive 912 to the sheet). The outer sides of the combined bases are preferably modified to have a good appearance by attaching and fixing decoration parts 913 such as face tiles, blocks, and bricks to the sides. Thus, a field as shown in Fig. 22 (2) (top view) can readily be formed. In Fig. 22 (2), for example, a frame 91 formed by a waterproofed sheet 911 and decoration parts 913 contains sphagnum cultivation bases 472 each receiving a single sphagnum cultivation base 20B; sphagnum cultivation bases 472' each receiving a plurality of the present sphagnum cultivation bases 20B; and stone plates 473. Thus, a quick-made artificial sphagnum bog 914 on which sphagnum is exposed in various manners can be formed. The artificial sphagnum bog 914 needs water to pass through the frame 91. Water can pass through the frame 91 as desired by introducing water via a portion of the frame 91 and draining water via a drain port formed at another portion of the frame. Specifically, water introduced via a portion of the frame 91 passes through trenches formed at the bottoms of sphagnum cultivation bases 472 and 472' and is distributed to the entire bottom surface, while each of the present sphagnum cultivation bases 20B is fed with water. Thus, the live sphagnum of the bases 20B can be nurtured.

In an embodiment of floating bases, for example as shown in Fig. 22 (3), water 922 is passed through a water tank 921 while the water level is controlled to a predetermined level, and sphagnum cultivation bases 472 (or 472') or other bases are caused to float on water in the tank, to thereby grow the live sphagnum of the sphagnum cultivation bases 472. In this embodiment, preferably, the sphagnum cultivation bases 472 are connected with one another and with the water tank 921 through use of a corded member 923 for locking the base.

Figs. 23 (1) to (3) show a sphagnum cultivation base 93 according to another embodiment of the present invention, employing a support floated on water. Fig. 23 (1) [sectional elevation (I-I')] shows a support 932 having a support body 931 and two arms. The support body 931 is produced by preparing a ball formed of a lightweight material such as expanded polystyrene, cutting the ball along a plane to form a bottom 9311, and forming a through-hole 9312 extending from the bottom 9311 to the corresponding top portion. The two arms are formed of metal wires, preferably coated with plastic or a similar material. Each arm has a hand-shaped portion 9313 at one end, and the other end of the arm is inserted into the support body 931 at a side portion thereof to the through-hole 9312 and then fixed to the support body within the through-hole 9312 by use of a fixture 93131. Live sphagnum of the present sphagnum cultivation base 20B grows on the roundish surface of the support 931. Subsequently, as shown in Fig. 23 (2) [sectional elevation (II-II'-II")], the surface of the arm-attached support 932 is decorated as desired through use of the above-described "a liquid substance which is hardened afterwards and is viscous before hardening" (9321, 9322, 9323), and parts imitating eyes (9324) or mouth (9325) are attached to the portion 9323 corresponding to the face. Thereafter, the bottom of the through-hole 9312 is covered by a mesh material 9326, and the present sphagnum cultivation base 20B is fitted in the through-hole 9312 from above, whereby the present sphagnum cultivation base 93 which is decorated and floats on water can be produced. The present sphagnum cultivation base 93 is preferably treated for balancing the base floating on water 9332 in the water tank 9331 as shown in Fig. 23 (3) by, for example, adjusting the locations of the two hand-shaped portions 9313 or by installing balances 9333 in the through-hole 9312 at appropriate locations.

As described above, environments suitable for nurturing live sphagnum can be realized in a variety of modes.

### [Examples] The present invention will next be described by way of Examples.

### [The sphagnum cultivation base according to the first embodiment]

### <Production>

(1) Old newspaper (4 g) was shredded in water (500 mL) and then kneaded thoroughly. The kneaded product was mixed with dried sphagnum plants (a commercially available product for gardening; boiled) (100 g, dry base), and water (3 L) was added thereto, thereby preparing, from shredded paper, a water-containing composition containing dried sphagnum plants.
(2) The water-containing composition (about 1 kg) was processed in a manner shown in Figs. 3 (1) to (5), to thereby produce a dried-sphagnum molded product forming a cylinder (height: about 8 cm, diameter at bottom: about 15 cm) and having a depression (diameter: about 3 cm, depth: about 5 cm) at a center portion of one bottom of the cylinder. Separately, a bunch of live sphagnum (about 2 g, dry base) was prepared by use of *Sphagnum palustre L.* plants obtained in large-scale cultivation to be described later, the bunch containing branches, leaves, and stems, the stems being cut so as to have a length of 5 cm. Subsequently, the bunch was pushed into the above depression in such a manner that only the stems were twisted to be pushed in the depression in a compressed manner, to thereby prepare a sole sphagnum cultivation base according to the first embodiment.

Fig. 24 shows the sole sphagnum cultivation base according to the first embodiment placed in a washbowl containing water.

### <Growth test>

(1) Two sphagnum cultivation bases according to the first embodiment prepared in the manner described in (2) above were placed in a plastic container having numerous side holes, and the plastic container was placed in a larger dish-like container. Sand was placed in the plastic container such that dried-sphagnum molded products of the two sphagnum cultivation bases were barely covered. Water was continuously fed to the outer dish-like container, and the water level was controlled to about 2 to 5 cm through removal of excessive water via a drain hole. Thus, the lower part (2 to 5 cm from the bottom) of each sphagnum cultivation base was always in contact with water, while water level was maintained so as not to exceed the above level. The sphagnum cultivation bases were left to stand for three months (June to August) on the rooftop of a building in Tokyo. Figs. 25 and 26 show the initial and final states of the sphagnum, respectively. As shown, sphagnum was found to grow remarkably.
   Another test was performed simultaneously with the above test. Specifically, dried sphagnum plants were placed in the plastic container to a level of about 6 cm, on which a thin layer of sand was formed. On the sand layer, live sphagnum plants (about 8 g (dry base); i.e., about four times the amount of the live sphagnum plants employed in the above Example) were laid such that the plants overlapped with one another, and the container was left to stand under the same conditions. Also in this test, the sphagnum plants were found to grow to a certain degree. However, the growth level was clearly found to be low as compared with the case of the above Example.
   The difference in growth level is considered to be attributed to the form of the live sphagnum plants; i.e., in the above Example, the stems of the live sphagnum plants are tightly bundled, and the leaves and/or branches form a hillock.
(2) There was prepared a lightweight orbicular board made of expanded polystyrene having a thickness of about 3 cm and a diameter of about 15 cm. In the board, numerous small holes having a diameter of about 1.5 cm were formed. In each small hole, dried sphagnum plants were packed into the lower part (from the bottom to the level of about 1 cm), and a bunch of live sphagnum as described above (the stems having been cut to have a length of about 2 cm) were placed onto the dried sphagnum plants such that the stems were tightly fit in the hole. The board was allowed to float in a water bath such that the dried sphagnum plants came to the lower side. The lower side surface had been covered with a metal wire net so as not to allow the dried sphagnum plants to fall. The board was left to stand from June to September in a sunny room in Tokyo. During the course of the test, leaves and branches of the sphagnum plants grew, and, finally, the sphagnum plants covered substantially the entire surface of the lightweight orbicular board (Fig. 27).

### [The sphagnum cultivation base according to the second embodiment]

Shredded newspaper (180 g) and fine soil matter (500 g) [containing particulate cultivation soil dedicated for paddy rice seedling culture (400 g) and clay (100 g), the particulate cultivation soil having been finely granulated by means of a mixer to have a particle size comparable to that of a commercial non-particulate cultivation soil product] were incorporated into water (3 L), and the mixture was stirred and kneaded, to thereby prepare a precursor composition for a water-permeable composition (3 L).

The precursor composition was placed in a mold, and water was drained, to thereby produce a pumpkin-shaped molded product having a height of about 12 cm and a diameter at the bottom of about 15 cm and having a through-hole (diameter: about 5 cm) extending from top to bottom. After the mold was removed, the molded product was dried, to thereby prepare a support body. A water-containing composition containing shredded paper as described above and dried sphagnum plants was packed into the lower part of the through-hole (from the bottom to the level of 7 cm). A bunch of live sphagnum containing stems (5 cm) and small amounts of leaves and branches was placed in the upper part of the through-hole such that the stems were bundled and fit into the through-hole. The support body was decorated to form a face, whereby a sphagnum cultivation base according to the second embodiment of the present invention was obtained. The base was placed in a washbowl, and water was poured into the washbowl. The water level in the washbowl was controlled to a certain level. Thus, growth of the live sphagnum plants and enjoyable appearance were attained simultaneously (Fig. 28) .

### [Large-scale cultivation of sphagnum]

Large-scale cultivation of *Sphagnum palustre L.* plants was attempted through use of a fallow paddy field (about 5,000 m²) in a town in Ogachi-gun District, Akita Prefecture. Specifically, the field was dug to a depth of about 30 cm, to thereby form a stepdown area, or a trench. In order to prevent water from permeating from the bottom of the stepdown area, the bottom was coated with clay. Water conduits from an irrigation channel were connected to the stepdown area at a level proximate to the bottom for continuously feeding water from the irrigation channel. Drain ports were provided at a level of about 20 cm from the bottom for maintaining water level so as not to exceed the drain port level. In the stepdown area having such utilities, gravel was laid, thereby forming a field for cultivating sphagnum plants. Subsequently, holes (diameter: about 5 cm, depth: about 15 cm) were formed in the field, and dried sphagnum plants were packed into each hole (from the hole bottom to a level of about 10 cm) . Separately, bunches of natural *Sphagnum palustre* L. were prepared, each bunch containing bundle of stems, the stems having been cut to have a length of about 5 cm. Each bunch was placed on the upper part of each hole such that the stems fit in the hole, to thereby form a sphagnum cultivation base of the present invention (one base per 10 cm × 10 cm). The cultivation field was left to stand.

The *Sphagnum palustre* L. propagated all over the cultivation field [Fig. 29 (1)], and the height of the plants increased to about 30 cm over the course of 6 years [Fig. 29 (2)].

### Industrial Applicability

The present invention provides a sphagnum cultivation base which facilitates efficient and easy cultivation of sphagnum and is capable of improving environmental conditions, and a sphagnum cultivation system employing the cultivation base.

## Claims

1. A sphagnum cultivation base comprising a shape-imparted, aggregated mass of dried sphagnum and one or more units of live sphagnum, each of said unit(s) is a bunch of live sphagnum whose stems are bunched, the aggregated mass of dried sphagnum being in contact with the bunched stems of live sphagnum, a growth point of the live sphagnum being substantially exposed outside the aggregated mass of dried sphagnum, and the aggregated mass of dried sphagnum being maintained under condition that permit contact with water of a water basin.

2. The sphagnum cultivation base as described in claim 1, wherein the aggregated mass of dried sphagnum is given a shape by a binder component containing at least paper fiber.

3. The sphagnum cultivation base as described in claim 1 or 2, wherein the shape-imparted, aggregated mass of dried sphagnum has a depression, one or more unit(s) of the bunched stems of live sphagnum are inserted into the depression under compressed condition, and a growth point of the live sphagnum is substantially exposed from the depression of the aggregated mass of dried sphagnum.

4. The sphagnum cultivation base as described in claim 1 or 2, wherein the aggregated mass of dried sphagnum is given a shape by being fitted into a depression provided in a support.

5. The sphagnum cultivation base as described in claim 4, wherein the depression provided in the support is a through hole that penetrates the support.

6. The sphagnum cultivation base as described in claim 4 or 5, wherein the aggregated mass of dried sphagnum is substantially exposed at the bottom of the cultivation base.

7. A sphagnum cultivation system comprising a sphagnum cultivation base as described in any of claims 1 through 6, in which, while maintaining a growth point of a live sphagnum plant at a point above the water surface of the water basin, wetting the aggregated mass of dried sphagnum by bringing the mass into contact with the water of the water basin, and supplying the water that permeates the aggregated mass to wet the dried sphagnum to live sphagnum, to thereby nurture the live sphagnum.

8. The sphagnum cultivation system as described in claim 7, wherein the contact between the aggregated mass of dried sphagnum and the water of the water basin is achieved by installation of the sphagnum cultivation base in the water basin.

9. The sphagnum cultivation system as described in claim 7, wherein the contact between the aggregated mass of dried sphagnum and the water of the water basin is achieved by means of a mechanism which permits the sphagnum cultivation base to be placed above the bottom of the water basin.

10. The sphagnum cultivation system as described in claim 7, wherein the contact between the aggregated mass of dried sphagnum and the water of the water basin is achieved by means of a mechanism making use of a buoyant force to thereby float the sphagnum cultivation base in the vicinity of water surface.

11. The sphagnum cultivation system as described in any of claims 7 to 10, further comprising a flat and/or curved surface which extends substantially continuously from the opening, on the live sphagnum side, of a depression provided in an aggregated mass of dried sphagnum or a depression provided in a support, wherein live sphagnum is propagated on the flat and/or curved surface.

12. The sphagnum cultivation system as described in claim 11, wherein the flat and/or curved surface which extends substantially continuously from the opening, on the live sphagnum side, of the depression provided in the aggregated mass of dried sphagnum or the depression provided in the support is provided with a mechanism for feeding soaking water thereto.

13. The sphagnum cultivation system as described in claim 12, wherein the mechanism for feeding soaking water to the flat and/or curved surface is a through-hole which connects upper and bottom surfaces of a member defining the flat and/or curved surface and in which a water-absorbent material is packed.

14. The sphagnum cultivation system as described in claim 13, wherein the water-absorbent material is an aggregated mass of dried sphagnum.

15. The sphagnum cultivation system as described in any of claims 11 through 14, wherein the inclination of the flat and/or curved surface which extends substantially continuously from the opening, on the live sphagnum side, of the depression provided in the aggregated mass of dried sphagnum or the depression provided in the support falls within a range of -90° to +10° with respect to the horizontal plane of the opening.

16. The sphagnum cultivation system as described in claim 15, wherein the inclination of the flat and/or curved surface which extends substantially continuously from the opening, on the live sphagnum side, of the depression provided in the aggregated mass of dried sphagnum or the depression provided in the support is substantially 0° with respect to the horizontal plane of the opening.

17. The sphagnum cultivation system as described in any of claims 11 through 16, wherein the flat and/or curved surface which extends substantially continuously from the opening is a flat and/or curved surface which can be added later on.

18. The sphagnum cultivation system as described in claim 17, comprising an addition component for providing the later add-on flat and/or curved surface, wherein the addition component is fixed, in a contacting manner, to an outer extension of the member defining the flat and/or curved surface, to thereby add said later add-on flat and/or curved surface.

19. The sphagnum cultivation system as described in claim 18, wherein the addition component for providing the later add-on flat and/or curved surface has a through-hole which connects upper and bottom surfaces and in which is a water-absorbent material is packed.

20. The sphagnum cultivation system as described in any of claims 11 through 19, wherein a surface of the flat and/or curved surface which extends substantially continuously from the opening, on the live sphagnum side, of the depression provided in the aggregated mass of dried sphagnum or the depression provided in the support is formed by a material which contains substantially no nutrients for organisms.

21. The sphagnum cultivation system as described in any of claims 11 through 20, wherein the surface of the flat and/or curved surface which extends substantially continuously from the opening, on the live sphagnum side, of the depression provided in the aggregated mass of dried sphagnum or the depression provided in the support is formed by a water-impermeable material.

22. An addition component for providing an add-on flat and/or curved surface which is used with a sphagnum cultivation system as described in claim 11, which component further provides an additional add-on flat and/or curved surface by being fixed, in a contacting manner, to an outer extension of a member defining a first flat and/or curved surface which extends substantially continuously from the opening, on the live sphagnum side, of a depression provided in the aggregated mass of dried sphagnum or a depression provided in a support, whereby said additional add-on flat and/or curved surface forms a continuous flat and/or curved surface extending from the first flat and/or curved surface.

23. The addition component as described in claim 22, wherein the upper surface of the component that defines the flat and/or curved surface and the lower surface of the component are connected by a through-hole provided therein, and a water-absorbent material is packed in the through-hole.

24. The addition component as described in claim 23, wherein the water-absorbent material is an aggregated mass of dried sphagnum.
